(19) Europäisches Patentamt
European Patent Office
Office européen des brevets

(11) **EP 1 846 150 B1**

(12) **EUROPEAN PATENT SPECIFICATION**

(45) Date of publication and mention
of the grant of the patent:
**11.08.2010 Bulletin 2010/32**

(21) Application number: **06701030.6**

(22) Date of filing: **20.01.2006**

(51) Int Cl.:
**B01J 8/04** *(2006.01)*        **B01J 8/02** *(2006.01)*

(86) International application number:
**PCT/DK2006/000034**

(87) International publication number:
**WO 2006/076923 (27.07.2006 Gazette 2006/30)**

(54) **DISTRIBUTION DEVICE FOR TWO-PHASE CONCURRENT DOWNFLOW VESSELS AND METHOD OF DISTRIBUTION**

VERTEILVORRICHTUNG FÜR ZWEIPHASEN-ABWÄRTSGLEICHSTROMBEHÄLTER SOWIE VERTEILVERFAHREN

DISPOSITIF DE DISTRIBUTION POUR DES CUVES A CIRCULATION DESCENDANTE SIMULTANEE A DEUX PHASES AINSI QU'UN PROCEDE DE DISTRIBUTION

(84) Designated Contracting States:
**AT BE BG CH CY CZ DE DK EE ES FI FR GB GR HU IE IS IT LI LT LU LV MC NL PL PT RO SE SI SK TR**

(30) Priority: **21.01.2005 DK 200500109**

(43) Date of publication of application:
**24.10.2007 Bulletin 2007/43**

(73) Proprietor: **Morten Müller Ltd., ApS**
**3480 Fredensborg (DK)**

(72) Inventor: **MÜLLER, Morten**
**DK-3480 Fredensborg (DK)**

(74) Representative: **Nielsen, Henrik Sten et al**
**Budde Schou A/S**
**Vester Søgade 10**
**1601 Copenhagen V (DK)**

(56) References cited:
**EP-A- 0 596 195        EP-A- 0 848 974**
**WO-A-2005/068039        GB-A- 1 416 732**
**US-A- 5 051 214**

**Description**

BACKGROUND OF THE INVENTION

The invention relates to a device for distributing vapor and liquid uniformly over the cross section of a vessel with two-phase concurrent downflow. The invention is suited for but not limited to the application of distributing hydrogen rich treatgas and hydrocarbon liquid to the catalyst bed(s) in a hydroprocessing reactor such as a hydrotreating or hydrocracking reactor.

RELATED ART

A large number of distribution tray designs for two-phase concurrent downflow vessels have been described in literature and patents. The majority of these designs belong to one of the two categories given below:

**Chimney type of distribution trays:**

These distributors consist of a horizontal tray plate provided with a plurality of chimneys extending up above the tray plate. The chimneys form flow channels for vapor flow across the tray plate. For the earliest distribution tray designs liquid openings for liquid flow where provided in the tray plate. For presently used distribution tray designs one or more lateral liquid opening(s) for liquid flow are provided in the side of the chimneys. These lateral liquid opening(s) may be at one or more elevations and may vary in size and shape. The total flow area of the liquid openings is selected to hold a certain liquid level on the tray and the total cross sectional area of the vapor chimneys is normally selected to obtain a low pressure drop across the tray to ensure that the driving force for liquid flow through the liquid openings is mainly the static head of the liquid column above the liquid opening and not the pressure drop caused by vapor flow through the chimneys.

An example of a chimney type distribution tray is given in U.S. Patent No. 4,788,040. A predistribution tray 56 is used above a final distribution tray 66. The final distribution tray 66 is a tray provided with liquid openings/perforations 84 for liquid flow and with capped chimneys 62 for vapor flow. The chimneys 62 are also provided with lateral liquid openings 90 for liquid flow. Distribution trays with liquid openings in or close to the tray plate have shown to be susceptible to fouling and plugging since particulate impurities tend to settle out on the tray and plug the liquid openings.

Another example of a chimney type distribution tray is given in U.S. Patent No. 4,126,540. This distribution tray consist of tray plate 33 provided with a plurality of chimneys 31. Each chimney is provided with one or more lateral liquid openings for liquid flow 34. All liquid openings are in the elevation H above the tray plate. A perforated plate 32 is located above the chimney tray. The perforated plate has perforations 30. No perforations are provided in plate 32 directly above the chimneys 31. In this way direct liquid flow through the upper and open end of the chimneys is prevented. Another way of preventing direct liquid flow is by use of a chimney cap 24. This tray has improved resistance to fouling and plugging since the liquid openings are at a higher elevation and particulate impurities can therefore settle out on the tray without plugging the liquid openings. The drawback of chimney tray designs with liquid openings in one elevation only is a poor liquid flow rangeability. At low liquid flow rates the level will be at the liquid openings and the liquid flow trough each chimney becomes very sensitive to the variations in liquid depth which will always exist on the tray. At high liquid flow rates liquid will overflow the lowest elevated chimneys and cause liquid maldistribution.

US Patent No. 5,484,578 describes a distribution system consisting of predistribution tray 17 and final distribution tray 18. The final distribution tray 18 is a chimney type of tray provided with a plurality of non-identical chimneys 33 and 34. The chimneys are provided with lateral liquid openings for liquid flow in one or more elevations. The chimneys 33 have one or more liquid openings at a lower elevation than chimneys 34. In this way the liquid flow rangeability of the distribution tray is increased. The chimneys are provided with notches 38 to reduce the liquid maldistribution in case of liquid overflowing the chimneys.

Since the downwards flow velocity inside the chimneys needs to be low the exit flow pattern from the chimneys of the cited patent references is normally a low interaction flow pattern with liquid falling more or less vertical down from the drip edges of the chimneys. There is a limit on how close the chimneys can be spaced apart. With many chimneys on the tray on a close spacing the liquid flow per chimney is low. Therefore the area of the liquid openings also needs to be reduced to still hold the desired liquid level on the tray. If the size of the liquid openings is less than about 15-30 mm$^2$ then the liquid openings become susceptible to fouling and plugging. In other words there is a maximum chimney density which should not be exceeded if plugging of liquid openings shall be avoided. For typical chimney tray designs for hydroprocessing reactors the maximum chimney density ranges from 50 to 100 chimneys per square meter to prevent plugging of the liquid openings. Due to the limited number of distribution points or chimneys, a certain liquid spread at the exit of each chimney is desirable to avoid a point wise liquid flow below each chimney and no liquid flow in the areas between adjacent chimneys.

U.S. Patent No. 5,403,561 describes the use of conical spray producing means 23 in the outlet of the chimneys 24 on a chimney distribution tray 22. The spray producing means may consist of metallic ribbon wound in the form of an inverted conical helix. The conical vapor/liquid spray will ensure a good local liquid distribution from each chimney outlet. It is intended that the spray of vapor and liquid, as it impinges on the top surface of the fixed bed 18, will overlap.

A second example on how a good local liquid distribution can be achieved in the outlet from each chimney is given in U.S. patent 6,613,219. A dispersive system 28, such as a perforated plate, is used below the chimneys to spread the liquid.

A third example on improved local liquid spread in the outlet from each chimney is given in patent no. WO 00/53307. A flow distributing element 10 consisting of radially aligned corrugated plates 22, 22a, 22b is inserted into the outlet 12 of chimney 14 to produce a conical spray. The small size of the flow channels between the corrugated plates makes this design prone to plugging by solid impurities.

A drawback of all the referenced chimney trays is that the total chimney area needs to be large to achieve low flow rates and pressure drop in the chimney entrance. If the pressure drop for vapor entering the chimney is excessive then this pressure drop will increase the pressure drop across the lateral liquid openings. The result is that the liquid flow rangeability of the distribution tray is reduced: In operating cases with low liquid flow and high vapor flow the liquid level will be even lower, and in operating cases with high liquid flow and low vapor flow the liquid level will be even higher. In addition the sensitivity of the liquid flow from each chimney to variations in liquid depth across the tray is significantly increased with increased pressure drop for vapor entrance to the chimney because there is a large change in liquid flow rate when the liquid level passes a liquid opening.

In commercial applications the chimneys may occupy as much as up to 30% of the total distribution tray area. Therefore a resistance to liquid flow across the tray plate exists and liquid level gradients on the tray may occur. The liquid level gradients will result in liquid maldistribution. The chimney caps which prevent direct liquid flow into the chimney may occupy up to 50% of the total chimney tray area in commercial designs. A significant amount of the liquid which enters the distribution tray from above will therefore hit these caps. As a consequence the liquid which hits the caps needs to flow to the rim of the cap and fall down through the vapor entering the chimney. A significant amount of the liquid may therefore be withdrawn by the vapor into the chimney and does thus by-pass the lateral liquid openings and are causing liquid maldistribution.

**Bubble cap type of distribution trays:**

These distributors have a completely different mode of operation than the chimney type of distribution trays. While the static liquid head is the driving force for liquid distribution on the chimney distribution trays, the driving force for liquid distribution on the bubble cap tray is the vapor flow. The bubble cap distributor consists of a horizontal tray plate. A plurality of distribution units or bubble caps is provided for vapor and liquid flow across the tray plate. Each bubble cap is an inverted U-shaped flow conduit consisting of upflow channel(s) and downflow channel(s). The lower part of each upflow channel is provided with one or more lateral vapor openings, typically vertical slots or inverted V-notches. The downflow channel(s) is extending through the tray plate. The vapor is passing through the lateral vapor openings in the lower part of each upflow channel and is thereby generating a pressure drop from the vapor space above the tray to the inside of the upflow channel. Due to this pressure drop liquid is lifted up into the upflow channel, mixed with the vapor and the two-phase mixture is flowing up through the upflow channel, over an internal weir and down through the downflow channel and exits the distribution unit below the tray.

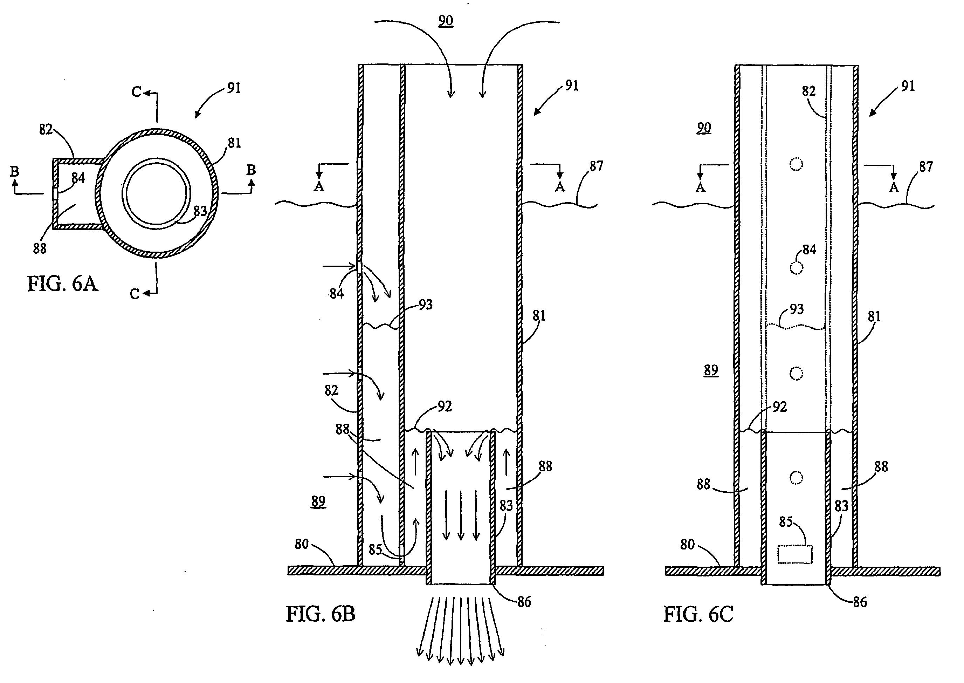

An example of a traditional bubble cap distribution tray is given in U.S. Patent No. 3,218,249. The distribution tray consist of tray plate 18 provided with a plurality of cylindrical downcomers 26 which serves as downflow channels. A cap 28 is overlaying each downcomer and is thus forming an annular upflow channel between the cap and downcomer. The cap is provided with slots as indicated in figure 6. During operation a liquid level will build up on the tray to a level intermediate the slots. Vapor will pass through the dry and upper section of the slot. A pressure drop is therefore generated from outside the cap to inside the annular upflow channel. Due to this pressure drop liquid is lifted from the liquid pool on the tray up into the annular upflow channel where it is mixed with the vapor. The two-phase stream is first flowing upwards through the annular upflow channel, then the stream is taking a 180° turn over the internal weir, consisting of the upper edge of the downcomer, and finally the two-phase stream is flowing downwards through the downcomer and is exiting the bubble cap below the tray plate 18.

The downcomer and cap of the bubble cap distribution unit may have many different shapes and layouts as illustrated in U.S. Patent No. 5,942,162, where square and rectangular shapes of the cap and the downcomer is suggested in addition to the circular shape.

The bubble cap distributor has three major performance problems:

1. The liquid flow from each distribution unit is very sensitive to variations in liquid depth across the tray plate. This is especially true in applications with high vapor load.

2. In order to reduce the performance problem mentioned in 1. the bubble cap distributors need to be designed with as low two-phase flow velocities inside the devices as possible. Since the vapor and liquid flow rates in the downflow vessel are fixed by other parameters, the available flow areas in the bubble cap, the upflow area, the flow area over the internal weir and the downflow area need to be maximized to achieve the desired low two-phase flow velocities. Therefore the bubble caps occupy a large fraction of the total downflow area need to be maximized to achieve the desired low two-phase flow velocities. Therefore the bubble caps occupy a large fraction of the total area of the distribution tray plate. In commercial designs up to about 50% of the tray area may be occupied by the bubble caps and at the same time the liquid level is low, typically only 50-100 mm. As a result the horizontal liquid flow velocity between adjacent bubble caps due to liquid flowing across the tray plate is high and consequent large liquid level gradients on the tray may occur due to the frictional loss. The liquid level gradients will result in further liquid maldistribution. The resistance to liquid cross flow and thus the liquid level gradients are larger for bubble caps with a rectangular cross section than for bubble caps with a round cross section due to a larger frictional loss.

3. Pressure gradients exist in the vapor space above the distribution tray. The liquid flow from each bubble cap is sensitive to these pressure differences.

US Patent No. 6,769,672 describes a bubble cap type distribution tray with significantly reduced sensitivity of the liquid flow from each bubble cap to variations in liquid depth across the tray plate. The improved bubble cap has two different types of upflow channels: upflow channels 16 with high vapor flow but low liquid flow and upflow channels 15 with low vapor flow and high liquid flow. However the bubble caps still occupy a large fraction of the tray area and liquid level gradients due to liquid flow across the tray are still a concern.

EP 0 848 974 A1 describes a bubble cap type design of the general type described in greater details above and is equivalent to US patent 5,942,162 also described in greater details above.

The intermediate document WO 2005/068039 describes a bubble cap type design within inserts in the flow channel constituting a bluff body. The designs shown in the reference are also previously described in the literature for instance in US patent 6,984,365 B2, in particular in Figs. 17 and 19, in which figures vanes 461 and 560 are used at the same location as in WO 2005/068039, namely in the transition zone between the upflow and the downflow channels.

As mentioned the two-phase flow velocities in the bubble caps must be kept as low as possible. This is in order to reduce the frictional pressure loss in the bubble cap. A low frictional pressure loss results in reduced sensitivity of liquid flow from each bubble cap towards the unavoidable variations in liquid depth across the tray. For this reason attempts to improve the local distribution or spread of liquid at the outlet of each bubble cap by use of different inserts for liquid dispersion has failed. One example of such an attempt is given in U.S patent 5,158,714. The inserts will represent a flow restriction and will increase the frictional pressure loss. As a consequence bubble caps with inserts or other flow restrictions show significantly increased sensitivity of liquid flow from each bubble cap to variations in liquid depth across the tray, which again results in a poor tray wide liquid distribution. A poor tray wide liquid distribution can not be compensated by an improved local liquid spread at the bubble cap outlets.

CRITERIA FOR PROPER PERFORMANCE OF A DISTRIBUTION TRAY

The following criteria must be fulfilled by a proper distribution tray:

A) There must be close to identical liquid flow rates from each of the distribution units on the distribution tray no matter of variations in liquid depth on the tray. The sensitivity to variations on liquid depth is quantified as the liquid maldistribution due to 12.7 mm (½ inch) "out-of-level" conditions, %Mal$^{½\ inch}$:

$$\%Mal^{\frac{1}{2}inch} = \frac{2 \times abs\left[Q_l^{low} - Q_l^{high}\right]}{Q_l^{low} + Q_l^{high}} \times 100\% \qquad (1)$$

Where:

%Mal$^{½\ inch}$ is the percent liquid maldistribution due to 12.7 mm (½ inch) "out-of- level" conditions.

$Q_l^{high}$ is the liquid volumetric flow through one distribution unit elevated 6.35 mm (¼ inch) higher than average, m$^3$/s.

$Q_l^{low}$ Is the liquid volumetric flow through one distribution unit elevated 6.35 mm (¼ inch) lower than average, m$^3$/s.

Variation in liquid depth from distribution unit to distribution unit (out-of-level conditions) will always exist in commercial hydroprocessing units since:

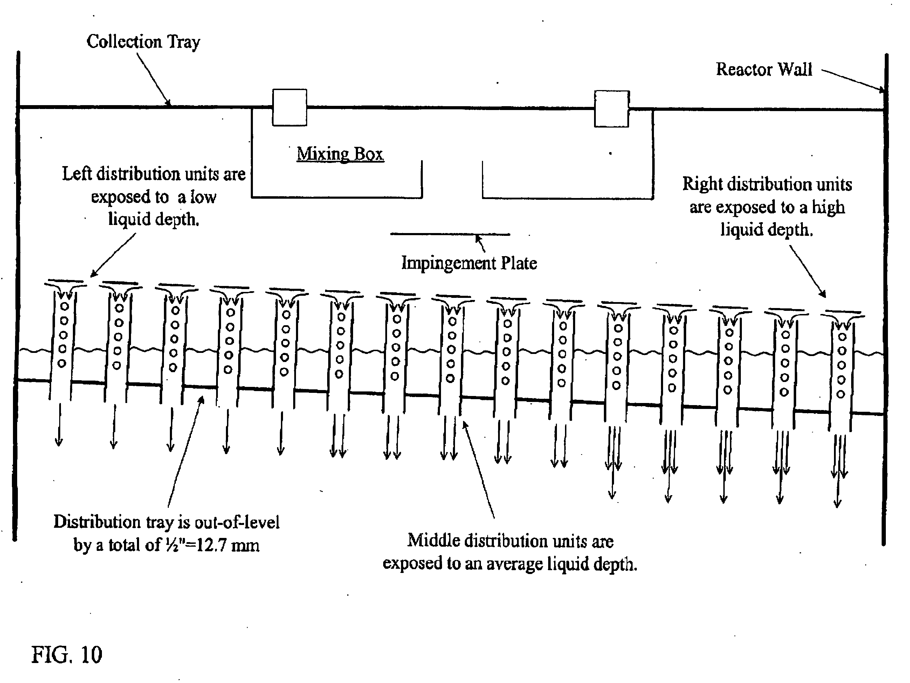

1) The support ring and thus the tray plate is not in perfect level, see figure 10.

2) The tray plate and/or the tray support beams will deflect due to the load.

3) There are offsets in elevation of each individual distribution unit on the tray due to fabrication tolerances.

4) The liquid surface will be wavy due to the quite turbulent conditions above the distribution tray and due to liquid falling down from above.

5) There are often significant liquid level gradients on the tray due to liquid flowing across the tray. Often a radial flow from vessel centerline towards the vessel wall exists.
A typical level difference in commercial reactors due to fabrication and installation tolerances (above points 1, 2 and 3) is about 12.7 mm (0.5 inch).

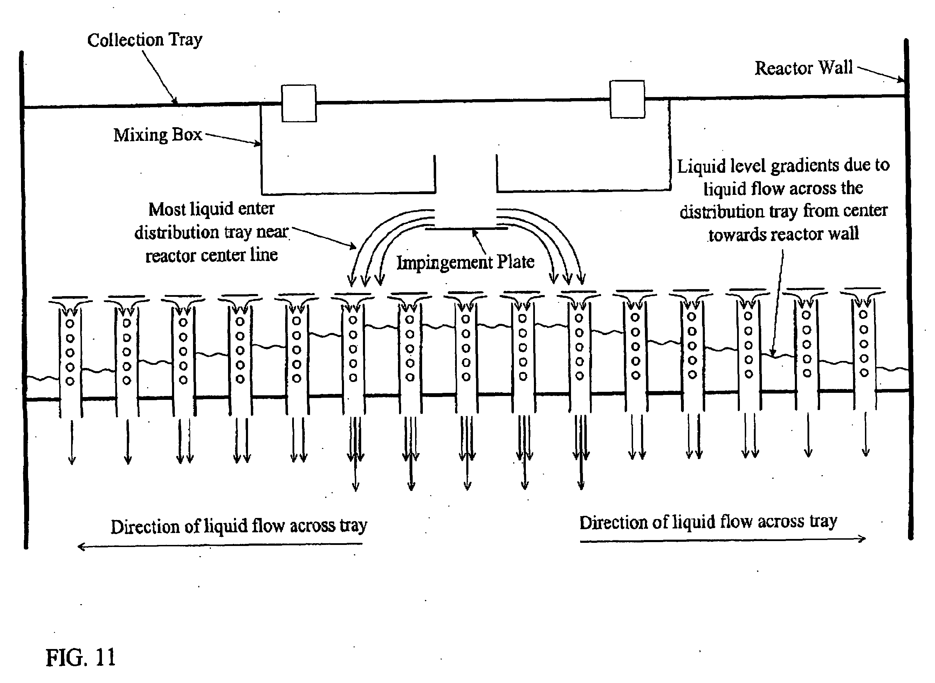

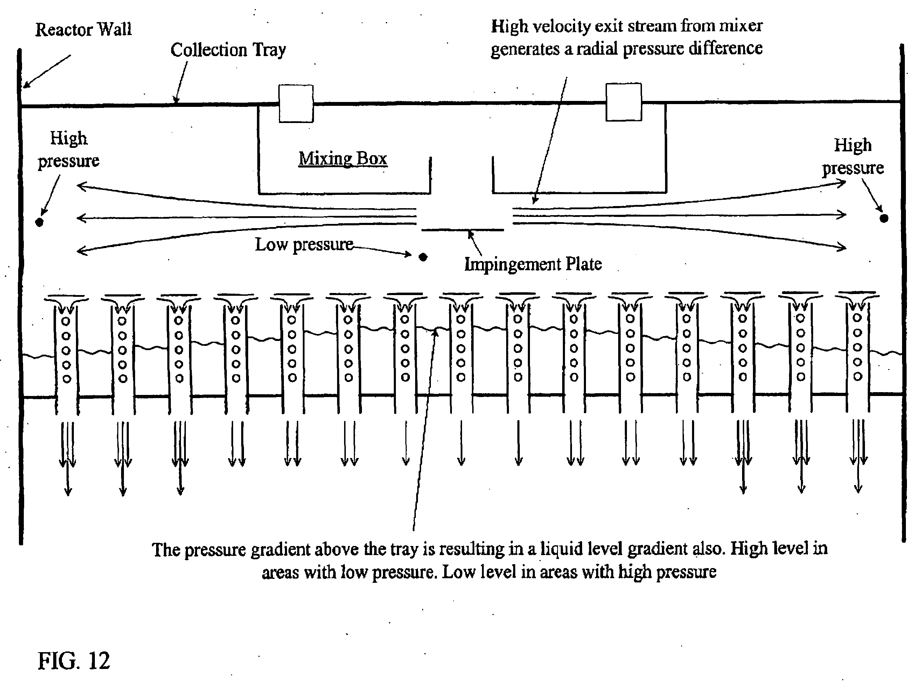

B) There shall be many distribution units per $m^2$ of tray area. With about 90 distribution units per $m^2$ the liquid spread caused by a 200 mm thick layer of 25.4 mm (1 inch) diameter inert balls, located below the distribution tray, results in a uniform liquid distribution at the outlet of this inert particle layer which is typically the inlet to the active catalyst bed in a catalytic reactor. If means for improved local spread of the liquid exiting each distribution unit are used then less than 90 distribution units per $m^2$ may be acceptable. The coverage of the catalyst bed with distribution units shall be as uniform as possible. There shall not be areas near the reactor wall, thermowells or support structures, which are not covered by distribution units.
C) The distributor needs to be resistant towards fouling like scales and particles. Such solid impurities will always be present in commercial applications.
D) Some liquid will pass with the vapor phase and will take the vapor path through the distribution unit. The liquid maldistribution caused by this effect shall be minimized.
E) Liquid entering the distribution tray is not evenly distributed. Some areas of the distribution tray receive large amounts of liquid while other areas may not receive any liquid at all, see figure 11. Therefore it is important that liquid can flow across the tray from one area to another without creating excessive liquid level gradients.
F) Pressure gradients in the vapor space above the distribution tray exist since the kinetic energy of the high velocity exit streams from an inlet diffuser or an inter-bed mixer is converted into a pressure rise, so that the pressure near the reactor wall is typically higher than the pressure near the reactor center, see figure 12. A typical pressure difference in commercial reactors is about 50 Pa. There must be close to identical liquid flow rates from each of the distribution units on the distribution tray no matter of these pressure differences. The sensitivity to pressure differences is quantified as the liquid maldistribution due to a 50 Pa pressure difference in the vapor space above the distribution tray:

$$\%Mal^{50Pa} = \frac{2 \times abs\left[Q_l^{hp} - Q_l^{lp}\right]}{Q_l^{hp} + Q_l^{lp}} \times 100\% \qquad (2)$$

Where:

$\%Mal^{50Pa}$      is the percent liquid maldistribution due to 50 Pa pressure difference.
$Q_l^{hp}$      is the liquid volumetric flow through one distribution unit exposed to a 25 Pa higher than average inlet pressure in the vapor space, $m^3/s$.
$Q_l^{lp}$      is the liquid volumetric flow through one distribution unit exposed to a 25 Pa lower than average inlet pressure in the vapor space, $m^3/s$.

Note that a pressure difference in the vapor space above the distribution tray causes a level difference as well. In the areas with low pressure the level will rise and in the areas with high pressure the level will drop, see figure 12. $\%Mal^{50\,Pa}$ is the liquid maldistribution resulting from the combined pressure and level effect.

## SUMMARY OF THE INVENTION

The invention as defined by the appended claims represents a new family of distribution trays for two-phase concurrent downflow vessels which has been developed to fulfill all six criteria for proper performance of a distribution tray listed above.

The present invention combines principles from both the chimney type of distribution trays and the bubble cap types of distribution trays. The driving force for liquid distribution of the present invention is thus a combination of the static head of a liquid column on the tray and the vapor flow through the device.

One layout of the distribution tray consists of a tray plate with a plurality of downcomers extending up above the tray plate. The downcomers have open upper ends in fluid communication with the vapor space above the tray and open lower ends communicating with the space below the tray. The downcomers serve as channels for passing the vapor and liquid through the tray. A liquid conduit is also provided for each downcomer with a liquid inlet submerged in the liquid pool on the tray, with a section for upwards flow of liquid and with liquid openings at more elevations in fluid communication with the downcomer. The liquid conduit is used to transfer liquid from the liquid pool into the downcomer. The lower end of the downcomer is provided with means for improving the local liquid spread from each downcomer such as vanes, baffles, ribbons, corrugated, flat or curved plates with or without perforations.

The majority of the vapor is flowing through the upper and open end of the downcomer and is thereby generating a pressure drop due to friction and due to acceleration. This pressure drop is utilized to lift the liquid up into the liquid conduit through the liquid inlet. The liquid level in the liquid conduit is above some or all of the liquid openings, and liquid is therefore flowing through the liquid openings and into the downcomer where it is mixed with the downwards flowing vapor. The two-phase mixture is flowing down through the downcomer and passes through the means for improving the liquid spread before it exits the downcomer.

The distribution tray has significantly improved distribution performance in terms of keeping close to identical liquid and vapor flow through all distribution units on the tray no matter of variations in liquid depth or vapor inlet pressure across the tray plate for a large range of both liquid and vapor flow rates. Due to the initial upwards flow direction of the liquid in the liquid conduit, scale and particles tends to settle out upstream the liquid openings. Therefore the distributor is less susceptible to fouling and plugging than a conventional chimney tray. The distribution unit consisting of downcomer and liquid conduit is very compact and the distribution units only occupy a small fraction of the tray area. Therefore the resistance to liquid flow across the tray is low, and the amounts of liquid by-passing the liquid openings through the vapor inlets is much lower than for a conventional chimney tray.

## BRIEF DESCRIPTION OF THE DRAWINGS

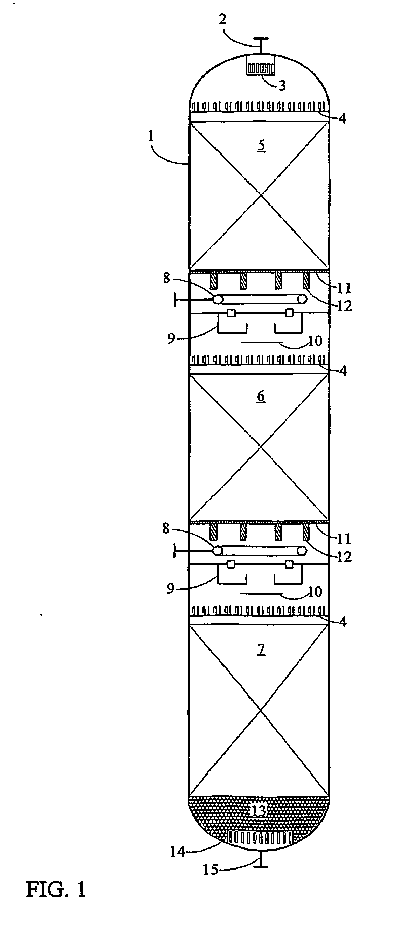

Figure 1 is a schematic representation of a typical reactor with three catalyst beds for hydroprocessing of hydrocarbon fractions.

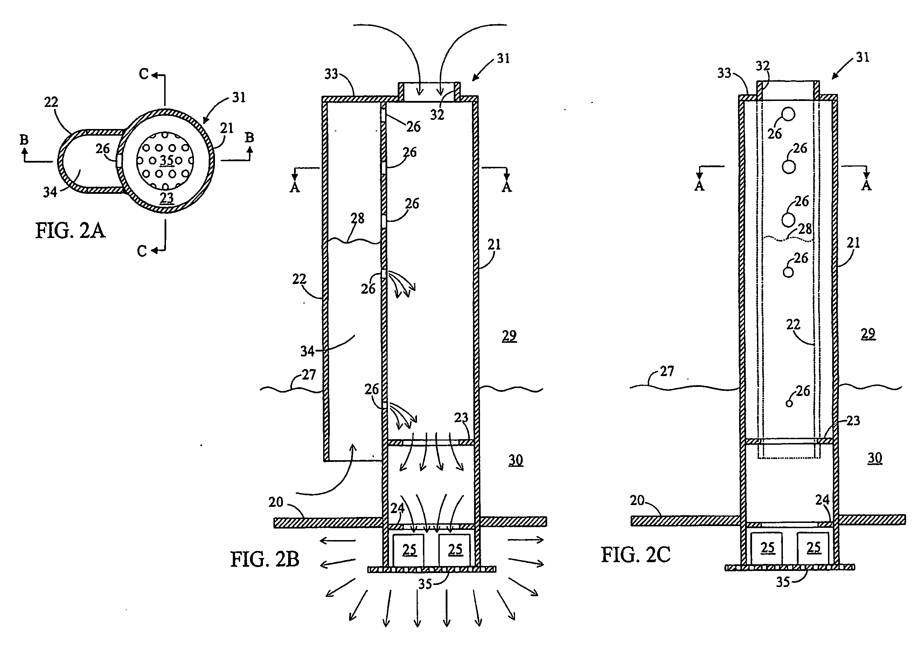

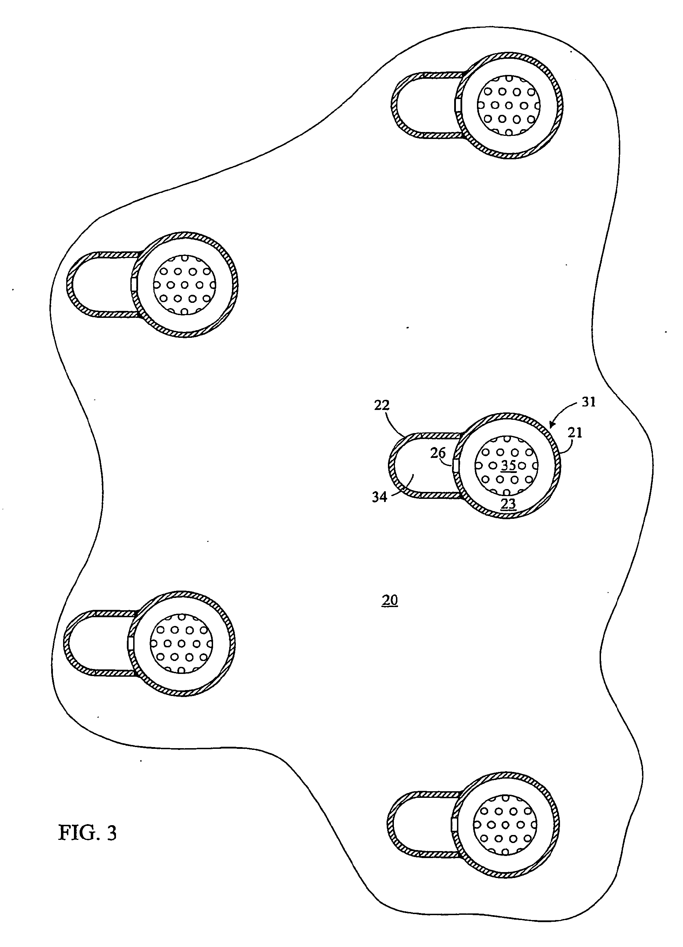

Figures 2A, 2B, 2C and 3 represent an example of an embodiment of a distribution tray of the present invention. Figure 2A is a sectional view from above of one embodiment of the invention taken along the segment A-A. Figure 2B is a side sectional view taken along the segment B-B of figure 2A. Arrows in figure 2B indicate the fluid flow path through the distribution unit. Figure 2C is a side sectional view taken along the segment C-C of figure 2A. Figure 3 is a simplified sectional view from above of a section of the distribution tray showing five distribution units on a triangular pitch.

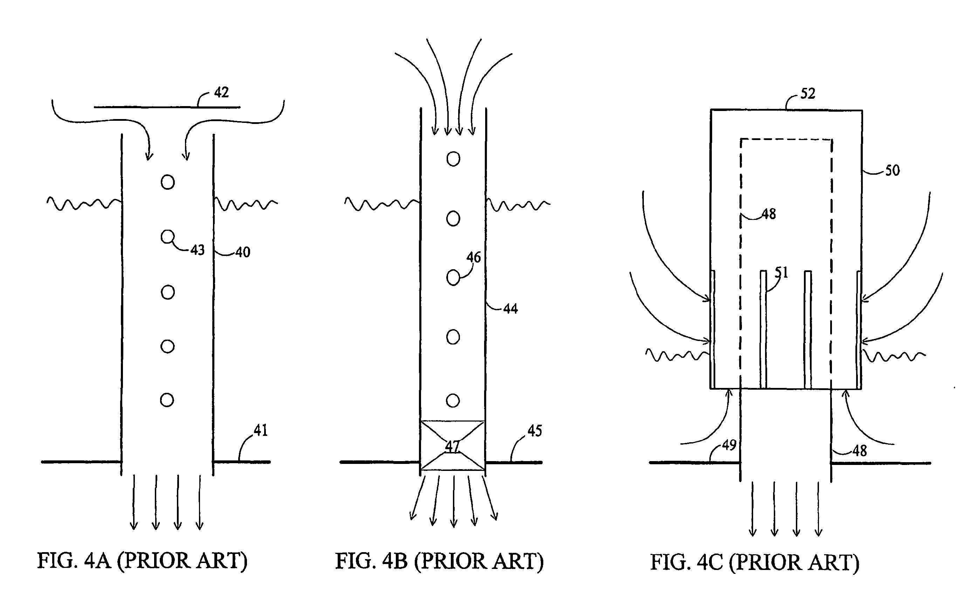

Figure 4A, 4B and 4C show the prior art distribution units, which have been evaluated and compared with the distribution tray of the present invention. Figure 4A is a side sectional view of a low velocity chimney of the prior art. Figure 4B is a side sectional view of a high velocity chimney of the prior art. Figure 4C is a side sectional view of a bubble cap distribution unit of the prior art.

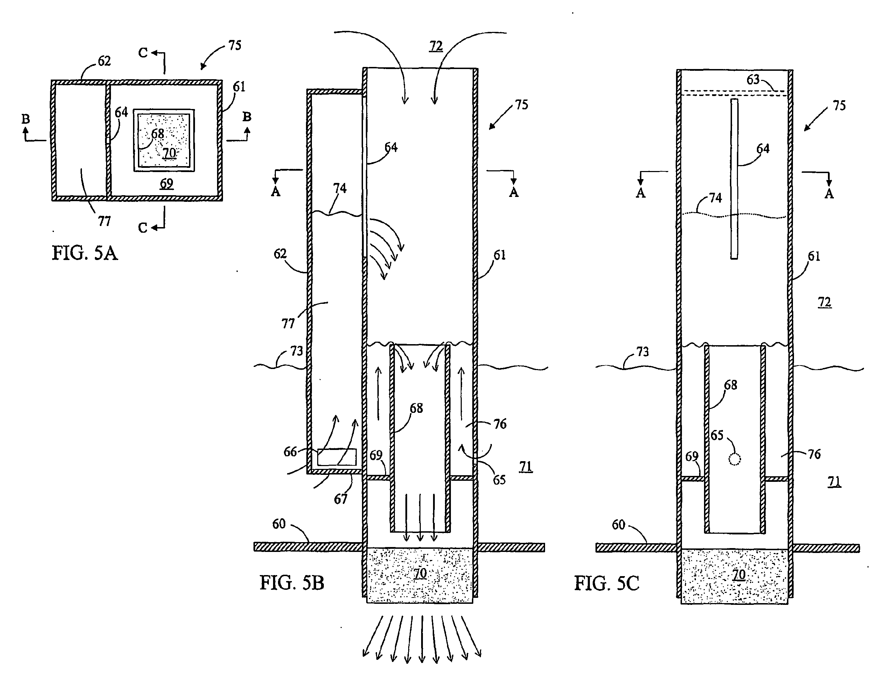

Figures 5A, 5B and 5C represent an example of an embodiment of a distribution unit of the present invention. Figure 5A is a sectional view from above of the distribution unit taken along segment A-A of figure 5B and 5C. Figure 5B is a side sectional view of the distribution unit taken along the segment B-B of figure 5A. Arrows in figure 5B indicate the fluid flow path through the distribution unit. Figure 5C is a side sectional view of the distribution unit taken along the segment C-C of figure 5A.

Figures 6A, 6B and 6C represent an example of an embodiment of a distribution unit of the present invention. Figure 6A is a sectional view from above of the distribution unit taken along segment A-A of figure 6B and 6C. Figure 6B is a side sectional view of the distribution unit taken along the segment B-B of figure 6A. Arrows in figure 6B indicate the fluid flow path through the distribution unit. Figure 6C is a side sectional view of the distribution unit taken along the segment C-C of figure 6A.

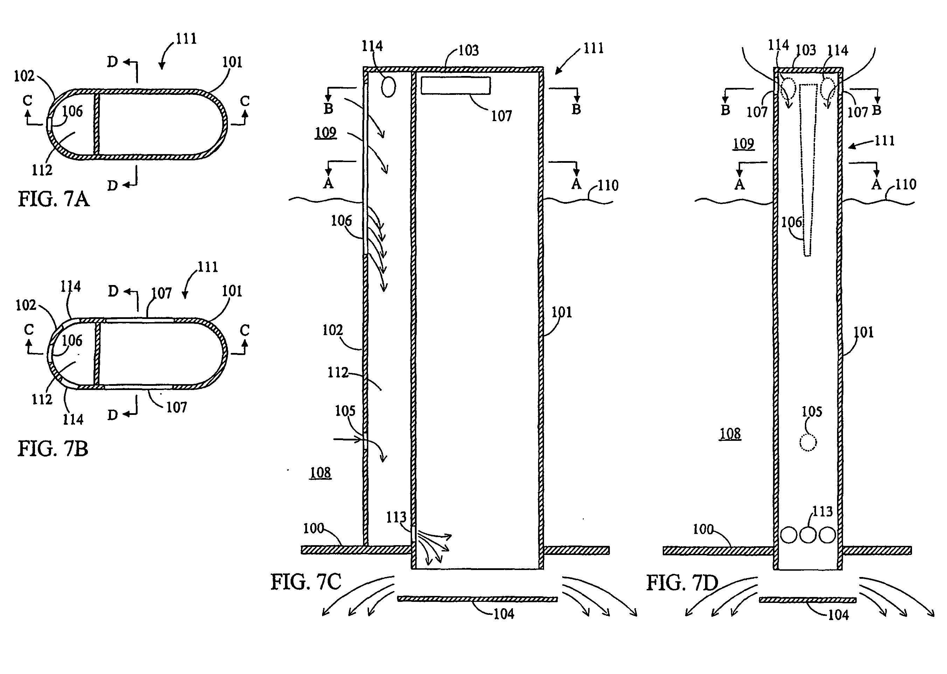

Figures 7A, 7B, 7C and 7D represent an example of an embodiment of a distribution unit of the present invention. Figure 7A is a sectional view from above of the distribution unit taken along segment A-A of figure 7C and 7D. Figure 7B is a sectional view from above of the distribution unit taken along segment B-B of figure 7C and 7D. Figure 7C is a side sectional view of the distribution unit taken along the segment C-C of figure 7A and 7B. Figure 7D is a side sectional view of the distribution unit taken along the segment D-D of figure 7A and 7B. Arrows in figure 7C and 7D indicate the fluid flow path through the distribution unit.

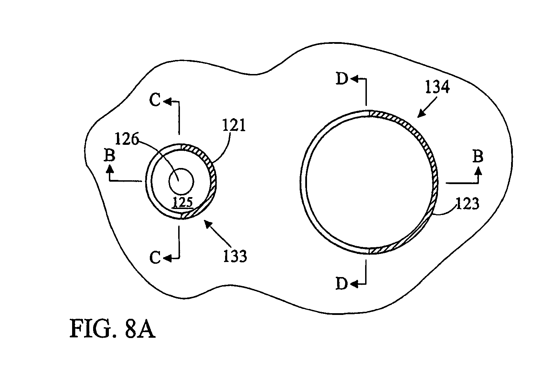

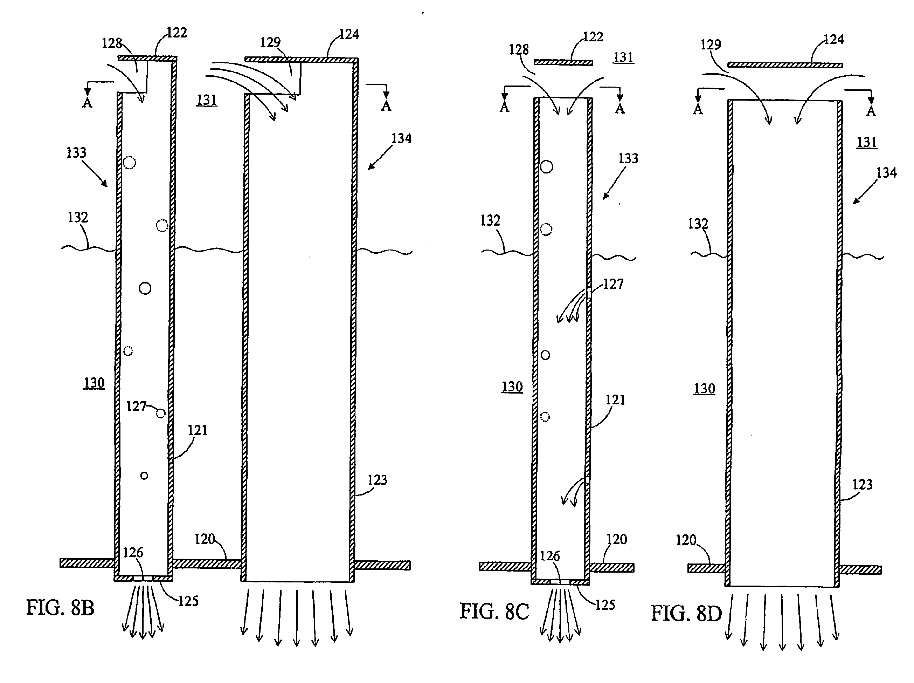

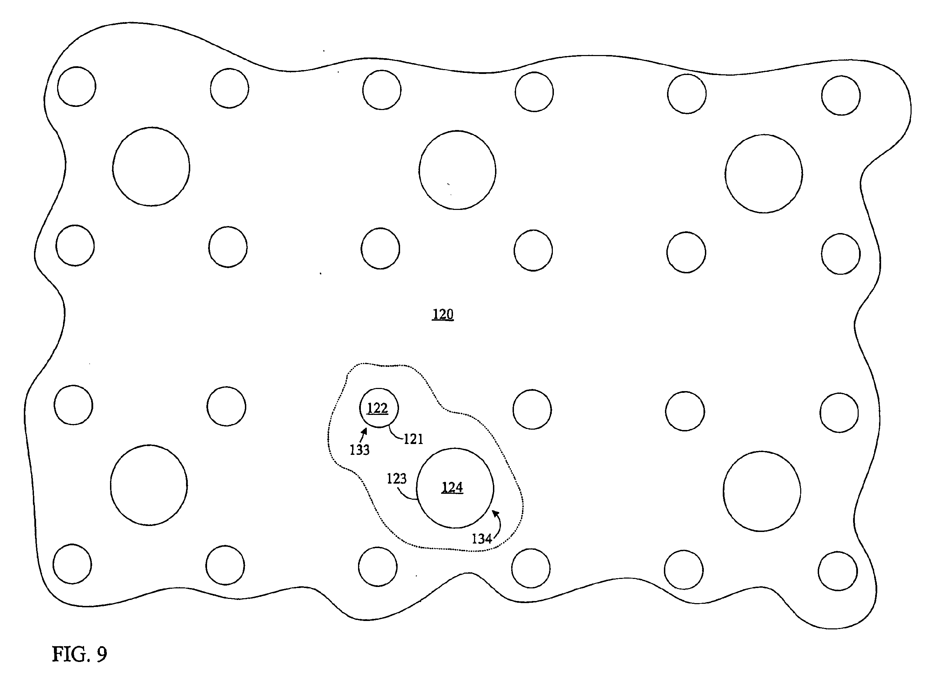

Figures 8A, 8B, 8C, 8D and 9 represent an example of an embodiment of a distribution tray of the present invention. Figure 9 is a simplified view from above of a section of the distribution tray. Figure 8A is a sectional view from above of the tray section indicated with a doted line in figure 9. Figure 8B is a side sectional view of the tray section taken along the segment B-B of figure 8A. Figure 8C is a side sectional view of the liquid conduit taken along the segment C-C of figure 8A. Figure 8D is a side sectional view of the downcomer taken along the segment D-D of figure 8A. Arrows in figure 8B, 8C and 8D indicate the fluid flow path through the distribution units.

Figures 10 to 12 illustrate criteria for proper performance of a distribution tray.

DETAILED DESCRIPTION

In commercial hydroprocessing reactors the two-phase mixture of reactants is flowing concurrently downwards through a fixed bed of solid catalyst particles. The ideal flow pattern in such a reactor is plug flow where liquid is flowing downwards with the same velocity (based on empty reactor) at all points of the reactor cross-section. In the ideal plug flow case the same is true for the vapor phase: The vapor is flowing downwards with identical velocity (based on empty reactor) at all points of the reactor cross-section.

In commercial reactors plug flow is never achieved due to non-ideal distribution trays, uneven catalyst loading and/or presence of deposits in the void space between the catalyst particles. Therefore in some areas of the catalyst bed the liquid flow velocity is higher than average and the vapor velocity is lower than average. Due to the high heat capacity of the liquid relative to the vapor the temperature rise in °C per meter of flow path is low in these areas. Similarly in other areas of the catalyst bed the liquid flow velocity is lower than average and the vapor velocity is higher than average. Again due to the high heat capacity of the liquid relative to the vapor the temperature rise in °C per meter of flow path is high in these areas.

As a result, even though the reactant mixture has a uniform temperature at the reactor inlet, some areas of the catalyst bed gets hotter than others as the fluids are passing through the bed. Further since the rate of reaction is increasing with increasing temperature this effect tends to accelerate: The hot areas of the catalyst bed has high rate of reaction and even more heat is therefore released in these areas than in the cold areas.

Due to the difference in rate of reaction between the hot areas and cold areas of the catalyst bed, differences in the chemical composition of the fluids are also developed.

The non-uniformity in temperature and chemical composition in a horizontal plane has several negative effects:

All hydroprocessing catalysts deactivate during operation. In order to compensate for the decline in activity of the catalyst the average bed temperature is increased during the run. At some point in time, at end-of-run, the peak temperature in the catalyst bed reaches its maximum allowable value. At this point the entire process unit needs to be shutdown and the catalyst must be regenerated or replaced. Now if there is non-uniformity in temperature in the horizontal plane the end-of-run will occur at an earlier stage and at a lower average bed temperature. The higher frequency of shut-down's caused by non-uniform temperatures has a high cost to the refiner in terms of lost production, higher catalyst consumption and additional labor.

Another effect of the non-uniformities is that the degree of chemical conversion is uneven. A fraction of the reactants will be converted to a high extend while the remaining fraction of the reactants are converted to a lower extend. The result is often lower overall product quality.

A first example is a diesel hydrotreating reactor where sulfur containing hydrocarbon components and $H_2$ is converted to sulfur free hydrocarbon components and $H_2S$. If non-uniform temperatures exist, then a fraction of the feed oil is reacted at higher temperature and maybe also at lower space velocity due to lower liquid velocity as discussed above. Another fraction of the feed oil is reacted at lower temperature and maybe also higher space velocity due to higher liquid velocity. The result is that the organic sulfur tends to "by-pass" the catalyst bed through the areas with low temperature and high space velocity. This by-pass significantly increases the content of organic sulfur in the overall product. In order to meet the product specification on organic sulfur content, the refiner needs to reduce the feed rate or increase the reactor operating temperature to compensate for the non-uniform temperatures and composition. Reducing the feed rate has a significant cost in terms of lost production. Increasing the reactor temperature results in increased energy consumption and reduced run length with increased frequency of shutdowns for catalyst generation/replacement. The increased frequency of shutdowns has significant costs as discussed above.

A second example is a hydrocracking reactor where heavier hydrocarbon components and $H_2$ are converted to lighter hydrocarbon components. Again if non-uniform temperatures exist then a fraction of the feed oil is reacted at higher temperature and maybe also at lower space velocity due to lower liquid velocity. Another fraction of the feed oil is reacted at lower temperature and maybe also higher space velocity due to higher liquid velocity. The result is that part of the heavy feed oil is "overcracked" so that the production of unwanted $C_1$-$C_4$ gasses and light naphtha components is significantly increased while another part of the heavy feed oil is only converted to a low extend. The selectivity of the hydrocracking reactions towards the desired product is thus reduced and the overall conversion of the heavy feed components to lighter product components is also reduced. Both effects are associated with significant costs to the refiner.

Non-uniformities in temperature and chemical composition in the horizontal plane of a catalyst bed are unavoidable in commercial hydroprocessing reactors. However the non-uniformities can be minimized by using suitable reactor internals such as distribution trays and inter-bed mixing devices.

Now referring to figure 1 showing a typical reactor with reactor internals and with three fixed beds of catalyst for hydroprocessing of hydrocarbon fractions and with injection of quench fluid for control of the inlet temperature to the second and third catalyst beds. Figure 1 is intended to define the typical location of the distribution tray relative to the catalyst beds and to other reactor internals.

The reactor consists of pressure shell 1 having a vapor/liquid inlet nozzle 2. The high velocity of the inlet stream is broken down in inlet diffuser 3 in order to prevent that the high velocity inlet jet impinges the distribution tray which would results in liquid reentrainment, waves and pressure gradients. Below the inlet diffuser the first distribution tray 4 is located to distribute the vapor and liquid evenly over the reactor cross section before the fluids enters the first catalyst bed 5. The catalyst bed 5 is supported by a catalyst screen or support grid 11. Normally large forces are acting on the support grid 11 and support beams 12 are therefore often required to absorb these forces. Quench fluid may be added through a quench nozzle and distributor 8 to the vapor and liquid exiting the first catalyst bed. The vapor and liquid mixture is now flowing through inter-bed mixer 9 where the temperature and composition of the stream is equilibrated. An impingement device 10 is located at the mixer outlet to ensure that the high velocity of the mixer exit stream is broken down in order to prevent that the high velocity jet impinges the distribution tray which would result in liquid reentrainment, waves and pressure gradients. The two-phase stream now enters the second distribution tray 4 which distributes the vapor and liquid evenly over the reactor cross section before the fluids enter the second catalyst bed 6.

The catalyst bed 6 is supported by a catalyst screen or support grid 11. Normally large forces are acting on the support grid 11 and support beams 12 are therefore often required to absorb these forces. Quench fluid may be added through quench nozzle and distributor 8 to the vapor and liquid exiting the catalyst bed 6. The vapor and liquid mixture is now flowing through inter-bed mixer 9 where the temperature and composition of the stream is equilibrated. An impingement device 10 is located at the mixer outlet to ensure that the high velocity of the mixer exit stream is broken down in order to prevent that the high velocity jet impinges the distribution tray which would result in liquid reentrainment, waves and pressure gradients. The two-phase stream now enters the third distribution tray 4 which distributes the vapor and liquid evenly over the reactor cross section before the fluids enter the third catalyst bed 7.

The third catalyst bed is resting on inert support material 13 in the bottom of pressure shell 1. An outlet collector is used at the reactor outlet as a catalyst/inert particle screen and to achieve uniform flow distribution in the bottom of the third bed 7. The vapor and liquid is flowing through outlet collector 14 and is exiting the reactor through outlet nozzle 15.

More or fewer catalyst beds than three may also be applied. The total number of distribution trays in a reactor often equals the number of catalyst beds. Predistribution trays for scale collection and for rough liquid distribution (not shown in figure 1) may be used upstream of any of the distribution trays 4. The use of predistribution trays reduces the liquid level gradients and liquid splashing on distribution trays 4, it normally reduces the pressure gradients in the vapor space above the distribution trays 4 and it reduces the likelihood of plugging the distributors on the distribution trays 4 by solid impurities. However predistribution trays take up additional reactor height.

Figures 2, 3, 5, 6, 7, 8 and 9 represent alternative structures of the distribution tray according to the present invention. The figures are presented only to characterize the invention and alternatives. They are not intended to limit the scope of the concepts disclosed herein or to serve as working drawings. They should not be construed as setting limits on the scope of the inventive concept. The relative dimensions shown by the drawings should not be considered equal or proportional to commercial embodiments.

One embodiment of a distribution tray of the present invention is shown in figures 2A, 2B, 2C and 3. Figure 2A is a sectional view from above of the distribution unit taken along segment A-A. Figure 2B is a side sectional view of the distribution unit taken along the segment B-B of figure 2A. Arrows in figure 2B indicate the fluid flow path through the distribution unit. Figure 2C is a side sectional view of the distribution unit taken along the segment C-C of figure 2A. Figure 3 is a simplified sectional view from above of a section of the distribution tray showing the layout of the distribution units on the tray plate.

The distribution tray consist of tray plate 20 provided with many identical distribution units 31 on a uniform triangular pitch. The tray plate 20 is typically assembled from several tray segments where each tray segment is able to pass through the reactor manway nozzle. The tray plate 20 is typically provided with a manway near the center of the reactor to provide a passageway for personnel and equipment during catalyst loading and inspection. Support structures such as a support ring welded to the inner vessel wall and support beams are normally required to support the tray plate. The tray plate 20 is provided with a plurality of holes on a triangular pitch. One circular downcomer 21 is fitted down through each hole.

Optionally a reduced flow area section may be provided inside the downcomer such as the reduced flow area section consisting of the two circular orifices 23 and 24 concentric with the downcomer 21. Four rectangular cuts 25 are provided in the lower edge of downcomer 21. A perforated plate 35 is mounted below the downcomer 21. Other means for providing a reduced flow area section and improved liquid spread at the downcomer outlet may be used such as vanes, baffles, ribbons, packing, corrugated, flat or curved plates with or without perforations.

Optionally the vapor entrance to the downcomer has a reduced flow area section such as the reduced flow area section consisting of the circular pipe piece 32 concentric with downcomer 21.

The liquid conduit is made of side wall 22 and top wall 33 which are attached to the outer wall of downcomer 21. Liquid openings 26 are provided at more elevations to form a fluid passageway from the liquid conduit into the downcomer.

The joints between tray plate 20 and downcomer 21, between side wall 22 and downcomer 21, between top wall 33 and side wall 22, between top wall 33 and downcomer 21 and between top wall 33 and pipe piece 32 are pressure tight.

During operation liquid will be collected in a liquid pool 30 on tray plate 20 and a vapor phase 29 will exist above the liquid pool 30. Due to the turbulent conditions above the tray plate the phase separation will normally not be complete, meaning that some vapor bubbles exist in the liquid and that liquid droplets exist in the vapor. The vapor is flowing through the pipe piece 32 and into the downcomer 21 at relatively high velocity compared to traditional chimney tray designs. A pressure drop from the outside to the inside of the downcomer 21 is therefore generated. This pressure drop is utilized to lift the liquid from the pool 30 up into the liquid conduit 34 so that the liquid level 28 in the liquid conduit 34 normally is higher than the liquid level 27 on the tray plate 20 depending upon the frictional loss for liquid entrance and flow in the liquid conduit. The liquid in the liquid conduit is first flowing upwards and then through the fraction of the liquid openings 26 which are elevated at or below the liquid level 28 in the liquid conduit. The liquid from the liquid openings is then entering the downcomer 21 where it is mixed with the downward flowing vapor inside the downcomer before the fluids enter the reduced flow area section consisting of orifices 23 and 24, where the flow velocity is increased for better liquid dispersion. The dispersed two-phase mixture is then spread by the perforated plate 35 and through the four openings 25. A fraction of the fluid stream is passing through the perforations in plate 35 in a vertical direction while the remaining fluid is passing through the openings 25 in a horizontal direction. The holes in perforated plate 35 are sufficiently small to prevent that the high velocity jet will move the particles located below the distribution tray.

The distribution unit 31 is normally designed so that the liquid level 27 on the tray is between the lower edge of side wall 22 and the upper edge of pipe piece 32 for all operating cases (i.e. for all relevant combinations of vapor and liquid flow). The distributor dimensions, which are normally adjusted to achieve this, include: the size, number and elevation of the liquid openings 26, the cross sectional area of liquid conduit 34, the cross sectional area of the downcomer 21 and the cross sectional area of pipe piece 32.

The distribution performance of the present invention is improved with increased tray pressure drop as explained below. The cross sectional area of the reduced flow area section consisting of orifices 23 and 24 and the means for improved liquid spread consisting of openings 25 and perforated plate 35 are normally sized to achieve an acceptable overall tray pressure drop and to achieve dispersion of the liquid. A too high tray pressure drop will add a large load to the tray plate during operation which will require stronger tray supports, it will increase the undesirable liquid leakage flow through joints between tray segments and it will make the mechanical design of the tray more complicated. A too high tray pressure drop will also add to both the initial and the operating cost of the process unit. The initial cost is increased due to the requirement for stronger support structures for the distribution tray and due to increased design pressure of upstream equipment. The operating cost is increased due to an additional energy requirement for pumps and compressors feeding gas or vapor and liquid to the reactor.

There are two main reasons for improved performance in terms of low maldistribution, as defined in equation (1), of the present invention relative to a traditional chimney tray such as the one described in US patent no. 5,484,578:

Reason 1:    Due to the liquid seal function of the liquid conduit 34 there is only very low or no vapor flow through the liquid openings 26 which are located at or above the liquid level 28 inside the liquid conduit. Therefore the pressure at liquid surface 28 is close to the pressure inside the downcomer at same elevation. As a result the driving pressure drop for liquid flow through a liquid opening 26 is mainly the static pressure of the liquid column inside the liquid conduit which is above the liquid opening. This is unlike a traditional chimney tray where the driving force is both the liquid height above the lateral liquid opening plus the pressure drop for vapor entrance to the chimney. The result is that the stepwise change in liquid flow when the liquid level 28 is increased or reduced and thereby is passing a liquid opening 26 is not as large for a distribution unit of the present invention as for a traditional chimney tray.

Reason 2: If we consider a distribution unit of the present invention which is elevated lower than a high distribution unit on same tray the liquid levels 27 and 28 will be higher relative to that distribution unit. Therefore there is a higher liquid column above the liquid openings (more driving force for liquid flow through the openings) and maybe also a larger area of liquid openings available for liquid flow (below the surface 28). The low distribution unit will thus pass more liquid than the high distribution unit. However since the low and the high distribution units are located on the same tray plate the total pressure drop through each of the two distribution units needs to be identical. A significant fraction of the tray pressure drop is in the reduced flow area section in orifices 23 and 24 and in the means for improved liquid spread, openings 25 and perforated plate 35. For the low distribution unit the larger liquid flow rate through these sections results in an increased pressure drop. In order to compensate the low distribution unit will pass less vapor than the high distribution unit so that the pressure drop through the two units equals each other. The reduced vapor flow through the low unit results in reduced pressure drop for vapor entrance to downcomer 21 and thus a reduced liquid level 28 inside the liquid conduit. The reduced liquid level 28 results in lower liquid flow through the liquid openings 26. The distribution unit of the present invention does thus have a certain compensational respond to variations in liquid depth on the tray or to differences in elevation of different distribution units which a traditional chimney tray does not have. For a low distribution unit the liquid level 28 will be lower relative to liquid level 27 than for a high distribution unit. This compensational effect tends to reduce the liquid maldistribution due to out-of-level conditions as defined in equation (1).

Other benefits of the present invention relative to prior art includes:

- Improved vapor liquid flow rangeability
- A good local liquid spread/distribution from each downcomer 21.
- Low liquid maldistribution caused by pressure variations in the vapor space above the tray as defined in equation (2).
- A low risk of fouling and plugging of the liquid openings 26 due to the initial upwards liquid flow direction which tends to separate or settle out scales and particles before these solids reaches the liquid openings 26.

Unlike the prior art chimney trays high vapor velocities may exist in the downcomer 21 and in pipe 32 without negatively affecting the distribution performance. Consequently the distribution tray of the present invention can be designed for a low total cross sectional area of the downcomers. The result is that only a smaller fraction of the tray area is occupied by distribution units. This has several benefits including:

1. The flow area available for horizontal liquid flow across the tray plate is large and therefore the liquid level gradients due to this cross flow are small and will not negatively affect the distribution performance of the tray to any significant extend.
2. Due to the small total cross sectional area of the pipe piece 32 on tray 20 no caps are needed above the distribution unit since it is only small amounts of liquid which will by-pass the liquid openings 26 through the upper ends of the downcomers.
3. The tray is easier to clean during periods where the reactor is shut-down due to wide cleaning lanes between adjacent distribution units. Cleaning is typically done with high pressure water jetting.
4. The tray segments are easier to assemble and disassemble since there is plenty of access room available between the distribution units for tools and personnel.

The performance of the distribution tray of the present invention has been compared to the performance of three other types of distribution trays:

1. A traditional chimney tray designed with low vapor velocity in the chimney.
2. A chimney tray with high vapor velocity in the chimney resulting in a larger degree of liquid dispersion and liquid spread at the outlet.
3. A traditional bubble cap tray.

The distribution performance has been evaluated in an application corresponding to a hydroprocessing reactor with an inner diameter of 4.5 m. The actual volumetric liquid flow to the distribution tray range from 53 m³/hr to 663 m³/hr corresponding to liquid mass fluxes in the reactor ranging from 2 ton/m²/hr to 25 ton/m²/hr. The actual volumetric vapor flow to the tray varies from 5,370 m³/hr to 19,243 m³/hr. The vapor and liquid properties used are given in table 1. The distributor performance have been evaluated in 30 combinations of liquid and vapor flow to cover the relevant operating flow range. These liquid and vapor flow combinations are given in table 2.

**Table 1: Vapor and liquid properties used for distributor comparison**

| Vapor density, kg/m³ | 25 |
|---|---|
| Vapor viscosity, cP | 0.02 |
| Liquid density, kg/m³ | 600 |
| Liquid viscosity, cP | 0.15 |
| Liquid surface tension, dynes/cm | 8.0 |

**Table 2: Vapor and liquid flow combinations used for distributor comparison**

| Data set no. | Liquid volumetric flow Actual m³/hr | Vapor volumetric flow Actual m³/hr |
|---|---|---|
| 1 | 53 | 5,370 |
| 2 | 53 | 7,831 |
| 3 | 53 | 11,188 |
| 4 | 53 | 14,991 |
| 5 | 53 | 19,243 |
| 6 | 106 | 5,370 |
| 7 | 106 | 7,831 |
| 8 | 106 | 11,188 |
| 9 | 106 | 14,991 |
| 10 | 106 | 19,243 |
| 11 | 159 | 5,370 |
| 12 | 159 | 7,831 |
| 13 | 159 | 11,188 |
| 14 | 159 | 14,991 |
| 15 | 159 | 19,243 |
| 16 | 265 | 5,370 |
| 17 | 265 | 7,831 |
| 18 | 265 | 11,188 |
| 19 | 265 | 14,991 |
| 20 | 265 | 19,243 |
| 21 | 464 | 5,370 |
| 22 | 464 | 7,831 |
| 23 | 464 | 11,188 |
| 24 | 464 | 14,991 |
| 25 | 464 | 19,243 |
| 26 | 663 | 5,370 |

(continued)

| Data set no. | Liquid volumetric flow Actual m$^3$/hr | Vapor volumetric flow Actual m$^3$/hr |
|---|---|---|
| 27 | 663 | 7,831 |
| 28 | 663 | 11,188 |
| 29 | 663 | 14,991 |
| 30 | 663 | 19,243 |

All four distribution trays have been designed to achieve optimal performance for the fluid flows and properties given above. Drawings of the evaluated chimneys and the bubble cap are given in figures 4A, 4B and 4C. Drawings of the evaluated distributor of the present invention are given in figures 2A, 2B, 2C and 3. The number of distribution units on the distribution trays and the pitch used are given in table 3. The performance of a distribution tray can always be improved by increasing the distributor height. The pressure shell of a catalytic rector is an expensive piece of equipment and a higher distributor will take up more reactor space and will increase the size and cost of the reactor. To make a fair comparison the total height of the distribution units above the tray plate for all four distribution trays is 240 mm.

**Table 3: Number of distribution units and pitch**

| | Distributor pitch | Distributor spacing, mm | Number of distribution units per m$^2$ | Number of distribution units on tray |
|---|---|---|---|---|
| Low velocity chimney tray | Triangular | 113 | 90 | 1350 |
| High velocity chimney tray | Triangular | 162 | 44 | 653 |
| Bubble cap tray | Triangular | 105 | 105 | 1564 |
| Present invention | Triangular | 136 | 62 | 937 |

Now referring to figures 4A, 4B and 4C. Figure 4A is a side sectional view of one of the chimneys of the evaluated low velocity chimney distribution tray. Arrows in the figure indicate the fluid flow path. The chimney 40 consists of 50 mm (2 inch) nominal diameter pipe with an inner diameter of 54.8 mm and an outer diameter of 60.3 mm. The chimney is routed through tray plate 41. The chimney extends 226 mm above the tray plate. A circular cap 42 with a diameter of 85 mm is positioned above the chimney at an elevation of 240 mm above the tray plate. The chimney 40 is provided with five circular liquid openings 43 which are equally spaced in the vertical direction and which all have a diameter of 5.9 mm. The center of the lowest liquid, hole is elevated 50 mm above the tray plate. The vertical spacing between adjacent liquid holes is 35 mm.

Figure 4B is a side sectional view of one of the chimneys of the evaluated high velocity chimney distribution tray. Arrows in the figure indicate the fluid flow path. The chimney 44 consist of 38 mm (1½ inch) nominal diameter pipe with an inner diameter of 42.8 mm and an outer diameter of 48.3 mm. The chimney is routed through tray plate 45. The chimney extends 240 mm above the tray plate. Due to the small total cross sectional area of the chimneys on the tray no chimney cap is used. The chimney 44 is provided with five circular liquid openings 46 which are equally spaced in the vertical direction and which all have a diameter of 8.2 mm. The center of the lowest liquid hole is elevated 50 mm above the tray plate. The vertical spacing between adjacent liquid holes is 38 mm. Inserts 47 for liquid dispersion are located in the outlet of chimney 44 to achieve a better spread of the liquid exiting the chimney.

Figure 4C is a side sectional view of one of the bubble cap units of the evaluated bubble cap distribution tray. Arrows in the figure indicate the fluid flow path. The bubble cap consists of downcomer 48 which is routed through tray plate 49. Downcomer 48 consists of 38 mm (1½ inch) nominal diameter pipe with an inner diameter of 42.8 mm and an outer diameter of 48.3 mm. The height of the downcomer extending above the tray plate is 225 mm. The cap 50 is concentrically overlaying the downcomer and is constructed of 64 mm (2½ inch) nominal diameter pipe with an inner diameter of 66.9 mm and an outer diameter of 73.0 mm. The upper end of the cap is closed by a circular plate 52. The lower edge of cap 50 is elevated 50 mm above the tray plate. The circular plate 52 is elevated 240 mm above the tray plate. The lateral wall of the cap is provided with six vertical and rectangular slots 51 which are equally distributed along the circumference of the cap. Each slot is 90 mm high and 3.5 mm wide.

The liquid level on the tray plate, the liquid maldistribution due to 12.7 mm (2½ inch) out-of-level as defined in equation (1), the liquid maldistribution due to 50 Pa pressure difference as defined in equation (2), the maximum difference in liquid level on the tray caused by liquid flow across the tray and the flow velocities inside the distribution units in each of the 30 vapor-liquid flow combinations are given in tables 4, 5, 6 and 7 for each of the four distribution trays.

## Table 4: Performance of the low velocity chimney tray (figure 4A)

| Data set no. | Liquid level above tray plate mm | Liquid maldistribution due to 12.7 mm (½ inch) out-of-level % | Liquid maldistribution due to 50 Pa pressure difference % | Maximum liquid level difference due to cross flow mm | Two-phase flow velocity inside chimney m/s |
|---|---|---|---|---|---|
| 1 | 64.8 | 40.6 | 11.9 | 0.5 | 0.47 |
| 2 | 63.4 | 40.2 | 7.6 | 0.6 | 0.69 |
| 3 | 60.5 | 39.7 | 5.4 | 0.6 | 0.98 |
| 4 | 56.1 | 98.9 | 18.6 | 0.7 | 1.31 |
| 5 | 52.2 | 200.0 | 153.8 | 0.8 | 1.68 |
| 6 | 87.3 | 53.4 | 33.8 | 1.2 | 0.48 |
| 7 | 86.6 | 53.6 | 35.2 | 1.2 | 0.69 |
| 8 | 85.5 | 54.2 | 36.6 | 1.2 | 0.99 |
| 9 | 84.5 | 55.3 | 39.9 | 1.3 | 1.32 |
| 10 | 83.6 | 56.6 | 43.8 | 1.3 | 1.69 |
| 11 | 104.6 | 18.7 | 6.6 | 1.8 | 0.48 |
| 12 | 103.2 | 18.5 | 4.8 | 1.9 | 0.70 |
| 13 | 100.3 | 18.3 | 4.0 | 2.0 | 0.99 |
| 14 | 95.9 | 18.1 | 3.5 | 2.2 | 1.32 |
| 15 | 89.4 | 52.0 | 21.2 | 2.5 | 1.69 |
| 16 | 133.3 | 16.3 | 6.2 | 2.9 | 0.49 |
| 17 | 131.9 | 16.2 | 4.9 | 3.2 | 0.71 |
| 18 | 129.1 | 16.0 | 4.2 | 3.4 | 1.00 |
| 19 | 124.6 | 29.0 | 11.2 | 3.7 | 1.33 |
| 20 | 121.5 | 32.6 | 24.2 | 3.8 | 1.70 |
| 21 | 183.5 | 10.9 | 3.8 | 5.2 | 0.51 |
| 22 | 182.2 | 9.9 | 3.2 | 5.2 | 0.72 |
| 23 | 179.3 | 8.7 | 2.9 | 5.4 | 1.02 |
| 24 | 174.9 | 8.6 | 2.5 | 5.7 | 1.35 |
| 25 | 168.5 | 8.5 | 2.3 | 6.1 | 1.72 |
| 26 | 225.9 | 6.8 | 3.1 | 6.9 | 0.53 |
| 27 | 224.6 | 6.7 | 2.7 | 7.0 | 0.74 |
| 28 | 221.5 | 6.7 | 2.4 | 7.2 | 1.03 |
| 29 | 217.1 | 6.6 | 2.2 | 7.5 | 1.37 |
| 30 | 210.7 | 6.5 | 2.0 | 8.0 | 1.74 |
| Average: | | 33.6 | 16.8 | | |

## Table 5: Performance of the high velocity chimney tray (figure 4B)

| Data set no. | Liquid level above tray plate mm | Liquid maldistribution due to 12.7 mm (½ inch) out-of-level % | Liquid maldistribution due to 50 Pa pressure difference % | Maximum liquid level difference due to cross flow, mm | Two-phase flow velocity inside chimney m/s |
|---|---|---|---|---|---|
| 1 | 59.1 | 40.6 | 14.6 | 0.1 | 1.6 |
| 2 | 52.9 | 190.0 | 99.8 | 0.1 | 2.3 |
| 3 | 51.1 | 200.0 | 166.6 | 0.1 | 3.3 |
| 4 | 50.0 | 200.0 | 200 | 0.1 | 4.4 |
| 5 | 49.2 | 200.0 | 200 | 0.1 | 5.7 |
| 6 | 88.1 | 51.6 | 43.4 | 0.1 | 1.6 |
| 7 | 86.1 | 52.6 | 41.1 | 0.2 | 2.3 |
| 8 | 83.3 | 44.5 | 28.3 | 0.2 | 3.3 |
| 9 | 53.5 | 153.8 | 78.4 | 0.4 | 4.5 |
| 10 | 52.0 | 200.0 | 126 | 0.4 | 5.7 |
| 11 | 103.7 | 14.8 | 7.8 | 0.2 | 1.6 |
| 12 | 92.9 | 39.5 | 21.3 | 0.3 | 2.4 |
| 13 | 88.8 | 54.8 | 49.2 | 0.3 | 3.4 |
| 14 | 86.4 | 55.1 | 47.6 | 0.3 | 4.5 |
| 15 | 84.6 | 52.2 | 38.4 | 0.4 | 5.7 |
| 16 | 135.3 | 14.1 | 7.0 | 0.4 | 1.7 |
| 17 | 128.3 | 30.3 | 20.7 | 0.4 | 2.4 |
| 18 | 124.6 | 30.6 | 25.3 | 0.5 | 3.4 |
| 19 | 112.4 | 4.7 | 2.4 | 0.5 | 4.5 |
| 20 | 90.1 | 55.8 | 40.1 | 0.9 | 5.8 |
| 21 | 192.1 | 7.3 | 4.2 | 0.6 | 1.7 |
| 22 | 181.5 | 6.8 | 3.9 | 0.6 | 2.5 |
| 23 | 166.2 | 21.3 | 15.1 | 0.8 | 3.4 |
| 24 | 161.6 | 21.4 | 15.8 | 0.9 | 4.6 |
| 25 | 129.4 | 28.5 | 17.9 | 1.2 | 5.8 |
| 26 | 240.0 | 5.5 | 3.3 | 0.7 | 1.8 |
| 27 | 228.9 | 5.3 | 3.1 | 0.8 | 2.5 |
| 28 | 208.1 | 10.7 | 5.4 | 1.0 | 3.5 |
| 29 | 200.6 | 16.2 | 13.4 | 1.2 | 4.6 |
| 30 | 169.5 | 13.9 | 7.2 | 1.4 | 5.9 |
| Average: | | 60.7 | 44.9 | | |

## Table 6: Performance of the bubble cap tray (figure 4C)

| Data set no. | Liquid level above tray plate mm | Liquid maldistribution due to 12.7 mm (½ inch) out-of-level % | Liquid maldistribution due to 50 Pa pressure difference % | Maximum liquid level difference due to cross flow mm | Two-phase flow velocity in upflow channel m/s | Two-phase flow velocity in downflow channel m/s |
|---|---|---|---|---|---|---|
| 1 | 105.1 | 22.6 | 118.8 | 0.3 | 0.6 | 0.7 |
| 2 | 93.7 | 66.3 | 83.3 | 0.3 | 0.8 | 1.0 |
| 3 | 79.5 | 81.0 | 46.6 | 0.4 | 1.2 | 1.4 |
| 4 | 64.9 | 81.5 | 20.4 | 0.4 | 1.6 | 1.9 |
| 5 | 50.0 | 82.8 | 3.3 | 0.6 | 2.0 | 2.4 |
| 6 | 105.7 | 18.3 | 96.6 | 1.1 | 0.6 | 0.7 |
| 7 | 94.6 | 59.5 | 63.2 | 1.2 | 0.8 | 1.0 |
| 8 | 80.8 | 78.8 | 31.6 | 1.3 | 1.2 | 1.4 |
| 9 | 66.6 | 83.1 | 9.4 | 1.6 | 1.6 | 1.9 |
| 10 | 52.2 | 81.8 | 5.7 | 2.2 | 2.0 | 2.4 |
| 11 | 106.1 | 16.4 | 82.4 | 2.4 | 0.6 | 0.7 |
| 12 | 95.2 | 53.2 | 50.9 | 2.7 | 0.8 | 1.0 |
| 13 | 81.8 | 71.9 | 22.9 | 3.2 | 1.2 | 1.4 |
| 14 | 67.9 | 77.4 | 3.8 | 3.9 | 1.6 | 1.9 |
| 15 | 53.8 | 77.4 | 9.2 | 4.7 | 2.0 | 2.4 |
| 16 | 106.8 | 14.4 | 60.5 | 6.7 | 0.6 | 0.7 |
| 17 | 96.2 | 42.6 | 33.1 | 7.7 | 0.9 | 1.0 |
| 18 | 83.2 | 56.2 | 11 | 9.0 | 1.2 | 1.4 |
| 19 | 69.8 | 59.7 | 1.7 | 10.7 | 1.6 | 1.9 |
| 20 | 56.1 | 59.1 | 9.2 | 13.7 | 2.1 | 2.4 |
| 21 | 107.7 | 17.1 | 37.6 | 21.5 | 0.6 | 0.7 |
| 22 | 97.6 | 36.6 | 16 | 24.4 | 0.9 | 1.0 |
| 23 | 85.2 | 45.1 | 0.4 | 28.8 | 1.2 | 1.4 |
| 24 | 72.4 | 46.3 | 8.1 | 37.6 | 1.6 | 1.9 |
| 25 | 59.4 | 44.9 | 12.8 | >50 | 2.1 | 2.4 |
| 26 | 108.6 | 20.4 | 27.2 | 47.2 | 0.6 | 0.7 |
| 27 | 98.8 | 36.6 | 8.4 | >50 | 0.9 | 1.0 |
| 28 | 86.8 | 43.5 | 4.7 | >50 | 1.3 | 1.5 |
| 29 | 74.5 | 44.1 | 11.3 | >50 | 1.7 | 1.9 |
| 30 | 62.0 | 42.4 | 14.7 | >50 | 2.1 | 2.5 |
| Average: | | 52.0 | 30.2 | | | |

## Table 7: Performance of the present Invention (figure 2 and 3)

| Data set no. | Liquid maldistribution due to 12.7 mm (½ inch) out-of-level % | Liquid maldistribution due to 50 Pa pressure difference % | Maximum liquid level difference due to cross flow mm |
|---|---|---|---|
| 1 | 29.6 | 16.9 | 0.1 |
| 2 | 28.4 | 16.1 | 0.1 |
| 3 | 26.7 | 15.0 | 0.1 |
| 4 | 24.8 | 13.8 | 0.1 |
| 5 | 22.7 | 12.5 | 0.2 |
| 6 | 33.9 | 19.6 | 0.2 |
| 7 | 32.0 | 18.3 | 0.2 |
| 8 | 29.3 | 16.7 | 0.3 |
| 9 | 26.4 | 15.0 | 0.3 |
| 10 | 23.4 | 13.2 | 0.5 |
| 11 | 13.2 | 8.1 | 0.4 |
| 12 | 12.9 | 7.8 | 0.4 |
| 13 | 12.4 | 7.4 | 0.4 |
| 14 | 11.8 | 6.9 | 0.5 |
| 15 | 11.1 | 6.5 | 0.7 |
| 16 | 17.9 | 10.8 | 0.6 |
| 17 | 17.1 | 10.2 | 0.7 |
| 18 | 16.0 | 9.5 | 0.7 |
| 19 | 14.7 | 8.7 | 0.9 |
| 20 | 13.4 | 7.8 | 1.1 |
| 21 | 14.7 | 8.5 | 1.8 |
| 22 | 14.0 | 8.1 | 1.4 |
| 23 | 13.0 | 7.5 | 1.7 |
| 24 | 11.8 | 6.9 | 1.7 |
| 25 | 10.6 | 6.3 | 2.7 |
| 26 | 12.0 | 7.6 | 2.9 |
| 27 | 11.5 | 7.3 | 2.3 |
| 28 | 10.8 | 6.8 | 2.7 |
| 29 | 10.0 | 6.2 | 3.5 |
| 30 | 9.1 | 5.6 | 3.3 |
| Average: | 17.9 | 10.4 | |

Now the performance of the four distributors is discussed based on the six criteria for proper performance of a distribution tray given above.

Criterion A:

As seen from table 4 the liquid level on the low velocity chimney tray is mainly a function of liquid flow. At high liquid flow the level is high. At low liquid flow the level is low. As a consequence of the low liquid level at low liquid flow rates the maldistribution due to 12.7 mm (½ inch) out-of-level is high (see data set no. 1 through 10 and data set no. 15). In data set no. 5 the maldistribution due to 12.7 mm (½ inch) out-of-level is as high as 200%, indicating complete maldistribution with no liquid flow through the higher elevated chimney. The low velocity chimney tray does thus not have the required liquid flow rangeability. The average maldistribution due to 12.7 mm (½ inch) out-of-level for all 30 data sets is 33.6%.

When comparing table 4 and 5 it can be seen that the liquid level on the high velocity chimney tray is lower than the liquid level on the low velocity chimney tray for the data sets with low liquid flow and high vapor flow, even though the maximum liquid level (data set no. 26) is higher for the high velocity chimney tray. The liquid flow rangeability of a chimney tray is reduced with increased flow velocity in the chimney. For the high velocity chimney tray the pressure drop for vapor entering the chimney is high and is significantly increased when the vapor flow to the tray is increased. Therefore the pressure drop across the lateral liquid openings is also increased when the vapor flow is increased and the liquid openings will start to pass more liquid. The liquid level on the tray will therefore drop until the liquid flow through the liquid openings equals the liquid flow fed to the tray. The low liquid level combined with the high pressure drop across the liquid openings results in higher maldistribution due to 12.7 mm (½ inch) out-of-level of the high velocity chimney than the low velocity chimney in the data sets with low liquid flow and high vapor flow. The average maldistribution due to 12.7 mm (½ inch) out-of-level for all 30 data sets is 60.7% which is almost twice as high as for the low velocity chimney.

As seen from table 6 the liquid level on the bubble cap tray is mainly a function of vapor flow rate and not as much of liquid flow rate. At high vapor rates the liquid level is low, and at low vapor flow rates the liquid level is high. The average maldistribution due to 12.7 mm (½ inch) out-of-level for all 30 data sets is 52.0% which is almost as high as for the high velocity chimney.

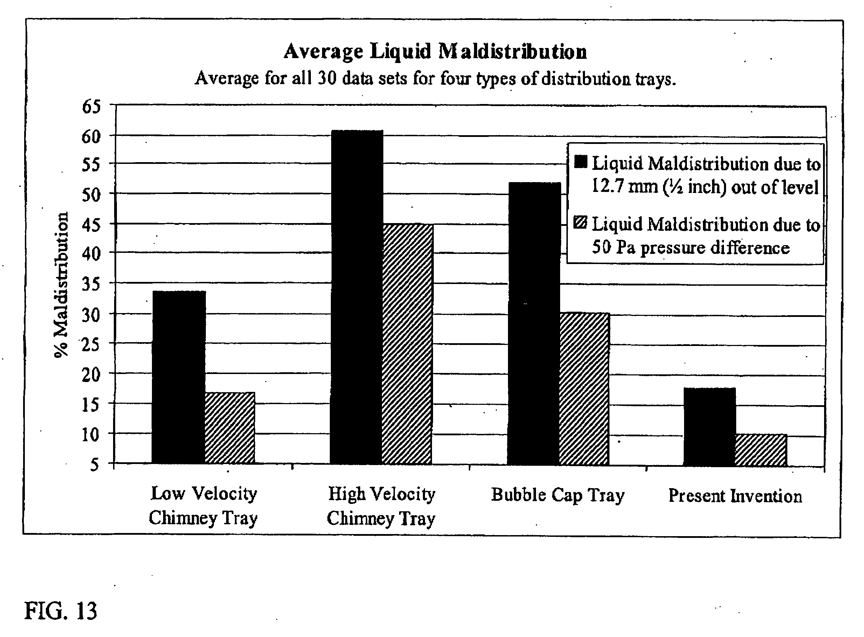

As seen from table 7 the distribution tray of the present invention has fully acceptable maldistribution due to 12.7 mm (½ inch) out-of-level throughout the entire range of vapor and liquid flows. The maldistribution is generally slightly higher at low liquid flows and low vapor flows, The average maldistribution due to 12.7 mm (½ inch) out-of-level for all 30 data sets is 17.9% which is significantly lower than for the three other distributor types. The average percent maldistribution of the four distributor types are compared in figure 13.

Criterion B:

As seen from table 3 the distribution trays with relatively low dispersion or spread of the liquid exiting each distribution unit (i.e. the low velocity chimney tray and the bubble cap tray) has a distributor density of 90 units/m$^2$ or larger, and uniform distribution at the inlet of the active catalyst bed should therefore bed achieved. For the distribution trays designed for liquid dispersion and a certain liquid spread at the outlet from each distribution unit (i.e. the high velocity chimney tray and the distribution tray of the present invention) the distribution unit density is lower than 90 units/m$^2$, but the Inserts used for liquid dispersion in the outlet of the distribution units is designed so that a uniform liquid distribution at the inlet of the active catalyst is achieved.

Criterion C:

All four distributors are designed to allow for accumulation of a layer of scales and particles on the tray plate up to a layer depth of 50 mm before distribution performance is affected due to fouling and plugging of apertures and flow channels. All four distribution trays therefore have an acceptable resistance to fouling and plugging. The Bubble cap and the distribution unit of the present invention have better resistance to fouling than the two chimney trays. For the bubble cap it is the high vapor flow velocity through the slots, which tends to keep the slots clean and free of fouling. For the distribution tray of the present invention it is the initial upwards flow direction of all liquid in the liquid conduit that causes scales and particles to settle out on the tray before these solids reaches the liquid openings.

Criterion D:

The chimneys of the low velocity chimney tray occupy 24.2% of the reactor cross sectional area. The chimney caps occupy 48.2% of the reactor cross sectional area. Therefore a significant amount of the liquid falling down on the distribution tray from above will hit the caps. This liquid will flow to the cap edges and will have to fall through the horizontal flow of vapor entering the chimney. A significant amount of the liquid may be entrained by the vapor. This liquid will thus by-pass the lateral liquid openings and result in liquid maldistribution.

The chimneys of the high velocity chimney tray occupy only 5.9 % of the reactor cross sectional area. Chimney caps are not needed since only a smaller amount of the liquid falling down on the distribution tray from above will hit the open upper ends of the chimneys and by-pass the lateral liquid openings through the chimneys.

For the bubble caps some entrained liquid will enter the upper part of the slots together with the vapor. However when entrained liquid is entering the slots with the vapor, less liquid is lifted up from the liquid pool. The bubble cap design therefore tends to compensate for entrained liquid.

The distribution tray of the present invention has a small downcomer area. Therefore, like for the high velocity chimney tray, it is only small amounts of the liquid falling down on the distribution tray from above, which will hit the open upper end of the downcomer and by-pass the liquid conduits through the downcomer.

Criterion E:

As seen from tables 4, 5, 6 and 7 the level difference caused by liquid flow across the tray is increased with increased liquid flow rate to the tray.

The high velocity chimney tray and the distribution tray of the present invention have relatively low level differences of maximum 1.4 mm and 3.3 mm respectively.

The low velocity chimney tray has high level differences of up to 8.0 mm due to the larger chimney cross sectional area.

The bubble cap tray has unacceptable large level differences exceeding 50 mm due to the large fraction of the tray area occupied by caps and due to the lower liquid level. When comparing the large level differences with the large maldistribution due to 12.7 mm (½ inch) out-of-level it can be concluded that severe liquid maldistribution will result from the bubble cap tray at high liquid flow rates.

Criterion F:

The liquid maldistribution caused by a 50 Pa pressure difference in the vapor space above the distribution tray for each of the four distributors are given in table 4, 5, 6 and 7 and compared in figure 13. As seen the high velocity chimney tray and the bubble cap tray are sensitive to pressure variations with average liquid maldistribution due to 50 Pa pressure difference of 44.9% and 30.2% respectively.

The low velocity chimney tray is less affected by pressure variations and has an average maldistribution due to 50 Pa pressure difference of 16.8%, while the distribution tray of the present invention has the lowest sensitivity to pressure variations with an average maldistribution due to 50 Pa pressure difference of only 10.4%.

A summary of the above comparison of the four distribution tray types based on the six criteria are given in table 8. As seen from table 8 the distribution tray of the present invention is the optimal distribution tray.

**Table 8: Summary of the comparison of four distribution tray types.**

|  | Low velocity chimney tray | High velocity chimney tray | Bubble cap tray | Present invention |
|---|---|---|---|---|
| Criterion A: | Poor | Very Poor | Very Poor | Good |
| Criterion B: | Good | Good | Good | Good |
| Criterion C: | Acceptable | Acceptable | Good | Good |
| Criterion D: | Poor | Acceptable | Good | Acceptable |
| Criterion E: | Poor | Good | Very Poor | Good |
| Criterion F: | Acceptable | Poor | Poor | Good |

Now some alternative embodiments of the present invention will be presented. More than one liquid conduit may be used per distribution unit. The required flow resistance towards liquid flow from the liquid pool through the liquid conduits and into the downcomer is typically obtained mainly by the liquid openings. However openings or restrictions at the entrance to the liquid conduit or inside the liquid conduit may also be used to achieve the required flow resistance. The liquid openings may have any shape such as for instance circular, rectangular or a tapered notch. The cross sectional area of the liquid conduit may have any shape such as for instance circular, ellipsoidal, triangular, rectangular, polygonal, annular or any shape composed of such shapes. The cross sectional area of the downcomer may have any shape such as for instance circular, ellipsoidal, triangular, rectangular, polygonal or any shape composed of such shapes. The cross sectional area of the reduced area section may have any shape such as for instance circular, ellipsoidal, triangular, rectangular, polygonal, annular or any shape composed of such shapes. Neither the means for achieving improved liquid spread in the downcomer outlet nor the reduced flow area section do necessarily have to be used. Impingement plates may be used below the downcomer outlet to break down the velocity of the jet to prevent that the jet is capable of moving the inert or catalyst particles below, and to improve the liquid spread. The impingement plate may be flat or curved or have any other shape. The impingement plate may be solid or have perforations or apertures.

An example of an alternative embodiment of a distribution unit of the present invention is given in figures 5A, 5B and 5C. Figure 5A is a sectional view from above of the distribution unit taken along segment A-A of figure 5B and 5C. Figure 5B is a side sectional view of the distribution unit taken along the segment B-B of figure 5A. Arrows in figure 5B indicate the fluid flow path through the distribution unit. Figure 5C is a side sectional view of the distribution unit taken along the segment C-C of figure 5A.

The distribution tray consists of tray plate 60 provided with a plurality of distribution units 75. Each distribution unit consists of a rectangular downcomer 61 fitted down through holes in the tray plate 60. A reduced flow area section is provided inside the downcomer consisting of rectangular channel 68 and baffle 69. Two liquid conduits allow for liquid flow from the liquid pool 71 and into the downcomer 61. The first liquid conduit 77 has a rectangular cross section and is made of side walls 62 and top and bottom walls 63 and 67. The required flow resistance towards liquid flow from the liquid pool through the first liquid conduit 77 and into the downcomer is obtained by two restrictions in series: One rectangular inlet opening 66 and a liquid opening consisting of a vertical slot 64. The second liquid conduit 76 is formed by the inner wall of rectangular downcomer 61 and the outer wall of rectangular channel 68. The required flow resistance towards liquid flow from the liquid pool through the second liquid conduit and into the downcomer is obtained by a circular inlet opening 65. Means for improved liquid spread 70 are used in the downcomer outlet. These means may consist of vanes, baffles, ribbons, packing, corrugated, flat or curved plates with or without perforations.

All joints between side walls 62 and downcomer 61, between top wall 63 and side walls 62, between top wall 63 and downcomer 61, between bottom wall 67 and side walls 62, between bottom wall 67 and downcomer 61, between downcomer 61 and tray plate 60, between baffle 69 and downcomer 61 and between baffle 69 and channel 68 are essentially leak tight.

During operation the vapor 72 is flowing through the open upper end of downcomer 61. A pressure drop from the outside to the inside of the downcomer 61 is therefore generated. This pressure drop is utilized to lift the liquid from the pool 71 up into the first and the second liquid conduits 77 and 76. The liquid in the first liquid conduit 77 is first flowing through inlet opening 66 which represents a flow restriction, then the liquid flows upwards and through the liquid opening consisting of vertical slot 64 before the liquid is mixed with the downwards flowing vapor inside downcomer 61. The liquid in the second liquid conduit 76 is first flowing through inlet opening 65, which represents a flow restriction, then the liquid flow upwards between the channel 68 and downcomer 61 and finally the liquid is overflowing the upper edge of channel 68 and into channel 68 where it is mixed with the downwards flowing two-phase mixture. The increased flow velocity in the restricted flow area section, which channel 68 represents, results in partial or complete liquid dispersion. The dispersed two-phase jet exiting channel 68 is then passing through the means for improved liquid spread 70 which provides a certain spread of the liquid exiting the distribution unit 75.

The distribution unit in figure 5 has the benefit over the distribution unit in figure 2 that the liquid opening 65 in figure 5C can easily be cleaned from the outside of distribution unit 75 while the lower liquid openings 26 in figure 2C has to be cleaned through the narrow downcomer which is somewhat more difficult. This is only if fixed attachments such as welding are used to fasten the liquid conduit to the downcomer. If the liquid conduit can be disassembled or removed from the downcomer then easier access for cleaning of liquid openings 26 in figure 2C is provided.

In the previous examples of the present invention the flow direction in the liquid conduit has in general been upwards. However the distribution unit according to the present invention may be designed with other general flow directions in the liquid conduit such as downwards flow. An example of an embodiment of a distribution unit of the present invention with a U shaped liquid conduit with a first downwards flow section followed by a second upwards flow section is given in figures 6A, 6B and 6C.

Figure 6A is a sectional view from above of the distribution unit taken along segment A-A of figure 6B and 6C. Figure 6B is a side sectional view of the distribution unit taken along the segment B-B of figure 6A. Arrows in figure 6B indicate the fluid flow path through the distribution unit. Figure 6C is a side sectional view of the distribution unit taken along the segment C-C of figure 6A.

The distribution tray consists of tray plate 80 provided with a plurality of distribution units 91. Each distribution unit consist of a circular downcomer 81 attached to tray plate 80. A reduced flow area section is provided inside the downcomer consisting of a circular pipe 83 which is routed through tray plate 80. The circular pipe extends down below the tray plate to provide a liquid drip edge 86. The first downwards flow section of liquid conduit 88 is constructed of side walls 82 which are attached to the downcomer 81 and to the tray plate 80. All joints between downcomer 81 and tray plate 80, between circular pipe 83 and tray plate 80 between side walls 82 and tray plate 80 and between side wall 82 and downcomer 81 are essentially leak tight. Four circular liquid openings 84 at different elevations are provided in side wall 82. A rectangular opening 85 is provided in the downcomer near the tray plate to allow for liquid flow from the first downwards flow section to the second upwards flow section of the liquid conduit.

Caps may be used to prevent direct liquid flow into the open upper ends of downcomer 81 and liquid conduits 88. However due to the relatively small cross sectional area of these upper ends the caps have been omitted in the shown examples.

During operation the vapor 90 is flowing through the open upper end of downcomer 81. A pressure drop from the outside to the inside of the downcomer 81 is therefore generated. This pressure drop is utilized for liquid flow from the first downward flow section of liquid conduit 88 through opening 85 to the second upwards flow section of liquid conduit 88. The size of opening 85 is usually selected so that liquid level 93 in the first and downwards section of liquid conduit 88 is lower than liquid level 92 in the second and upwards flow section of liquid conduit 88 in the operating cases with low liquid flow and high vapor flow and so that the liquid level 93 is higher than liquid level 92 in the operating cases with high liquid flow and low vapor flow. The difference in liquid level 87 on the tray and liquid level 93 is the driving force for liquid to flow through the liquid openings 84 which are elevated below liquid level 87. Liquid from the liquid pool 89 flow through liquid openings 84 into the liquid conduit 88 where it first flow downwards and through opening 85 and then upwards in the annular flow area defined by the downcomer 81 and the circular pipe 83. The liquid overflows the upper edge of pipe 83 where it is mixed with the vapor flowing downwards in the downcomer. The two-phase mixture flow through pipe 83 and exits the pipe below the tray plate.

Since there is very low or no pressure drop from outside the distribution unit 91 to the vapor space inside the upper part of liquid conduit 88 the distributor in figure 6 will show reduced maldistribution relative to traditional chimney trays due to the "Reason 1" mentioned above. However since some of the liquid openings 84 may pass the liquid into the vapor space above liquid surface 93 the "Reason 2" for reduced maldistribution will be less pronounced for distribution unit 91 than for the previous examples of the distributors of the present invention. This is because the liquid flow through any such liquid opening 84 located above level 93 is not affected by the pressure drop for the vapor entering the upper open end of downcomer 81.

Other drawbacks of the distribution unit 91 relative to the previous examples of the present invention are:

1. If no caps are used above the distribution unit, like shown in figure 6, the upper part of liquid conduit 88 will collect some of the liquid which fall down from above. As a consequence more liquid will by-pass the liquid openings 84. The by-passing liquid will not be distributed evenly across the tray.

2. Scales and particles may tend to collect in the bottom of the U-shaped liquid conduits upstream the opening 85. These solids may tend to plug opening 85. Plugging of this opening will result in liquid overflowing the downcomers 81. The overflowing liquid will be poorly distributed across the tray.

The previous examples of the present invention all have a liquid seal which prevents vapor flow through the liquid conduits. The liquid seal is achieved by having upwards flow in at least a section of the liquid conduit. The present invention may also be designed without this liquid seal. In this case the majority of the vapor is still flowing through the open upper end of the downcomer but a smaller amount of vapor may flow through the liquid conduits in the operating cases with high vapor flow rate and/or with low liquid flow. An example of such a distributor is given in figure 7.

Figure 7A is a sectional view from above of the distribution unit taken along segment A-A of figure 7C and 7D. Figure 7B is a sectional view from above of the distribution unit taken along segment B-B of figure 7C and 7D. Figure 7C is a side sectional view of the distribution unit taken along the segment C-C of figure 7A and 7B. Figure 7D is a side sectional view of the distribution unit taken along the segment D-D of figure 7A and 7B. Arrows in figure 7C and 7D indicate the fluid flow path through the distribution unit.

The distribution tray consists of tray plate 100 provided with a plurality of distribution units 111. Each distribution unit consists of a downcomer 101 with a cross section composed of a rectangular and semicircular shapes. The downcomer 101 is fitted through a hole in the tray plate 100. The liquid conduit 112 is constructed of semicircular wall 102 which is attached to the downcomer 101 and to the tray plate 100. All joints between downcomer 101 and tray plate 100, between semicircular wall 102 and tray plate 100 and between semicircular 102 and downcomer 101 are essential leak tight. A plate 103 serves as cap to prevent direct liquid flow into the upper end of liquid conduit 112 and downcomer 101. Two rectangular vapor openings 107 are provided in the upper part of downcomer 101 to allow for vapor entrance into the downcomer. Two circular holes 114 are provided in the upper part of semicircular wall 102 to allow for vapor entrance into the liquid conduit 112. A circular hole 105 and a tapered slot 106 are provided as liquid openings in semicircular wall 102. Three circular openings 113 serve as flow restrictions and are provided in the downcomer near the tray plate to allow for vapor/liquid flow from the liquid conduit 112 into the downcomer 101. Below the lower open end of downcomer 101 an impingement plate 104 is located to break down the velocity of the two-phase jet exiting the downcomer in order to prevent that the high velocity jet is reaching the particles located below, and in order to provide a certain liquid spread.

During operation the majority of the vapor 109 is flowing through the two rectangular openings 107. A pressure drop from the outside to the inside of the downcomer 101 is therefore generated. The liquid 108 is flowing through the fraction of the liquid openings 105 and 106 which are below the liquid level 110. Vapor is flowing through circular holes 114 and through the fraction of the openings 105 and 106 which are above the liquid level 110. The vapor and liquid is flowing downwards inside liquid conduit 112 and through flow restrictions 113 into the downcomer 101 where this two-phase stream is mixed with the vapor flowing in the downcomer. The amount of vapor taking the path through the liquid conduit 112 adjust itself until the total pressure drop through the openings 114, 105 and 106, through liquid conduit 112 and through openings 113 equals the pressure drop for vapor flow through the openings 107 and through the downcomer to the mix point with the two-phase stream from flow restrictions 113. The purpose of flow restrictions or openings 113 is to reduce the vapor flow through liquid conduit 112 and thus achieve a significantly lower flow velocity of the vapor entering the liquid conduit than the vapor entering the downcomer. A low vapor entrance velocity to the liquid conduit results in a low pressure drop from outside the distribution unit 111 to the inside of liquid conduit 112 and thus a low maldistribution as defined in equation (1).

Due to the vapor flow through the openings 114, 106 and 105 there is however a minor pressure drop from outside the distribution unit 111 to the inside of liquid conduit 112. The distributor in figure 7 will therefore show slightly increased maldistribution relative to the previous examples of the present invention since the benefit of "Reason 1" mentioned above is reduced. Since the liquid openings 105 and 106 will pass the liquid into a vapor space inside liquid conduit 112 the "Reason 2" for reduced maldistribution mentioned above is not relevant for distribution unit 111.

In spite of these two drawbacks of distribution unit 111 relative to the previous examples of the present invention the distribution unit 111 will still show improved performance relative to traditional chimney distribution trays, because the distribution unit 111 can be designed with a small cross sectional area and with high vapor flow velocities in the downcomer 101 without significantly increasing the maldistribution as defined in equation (1). The significant benefits of small distribution units have already been discussed.

In some operating cases with high liquid flow and low vapor flow a liquid level may build-up in the conduit 112 just like for the distribution unit in figure 6. In that case no vapor is flowing through the conduit 112 or the openings 113.

In all previous examples of the embodiment of the present invention the distribution units on one distribution tray have all been identical. However different distribution units may be used on one distribution tray. In all previous examples of the embodiment of the present invention the downcomer for vapor flow and the liquid conduit is a part of the same assembly or distribution unit. However the downcomer for vapor flow and the liquid conduits may be provided in separate assemblies or distribution units on the tray. Figures 8 and 9 represent an example of such a distribution tray.

Figure 9 is a simplified view from above of a section of the distribution tray designed with separate downcomers and separate liquid conduits. Figure 8A is a sectional view from above of one downcomer and one liquid conduit taken along segment A-A. Figure 8A corresponds to the section of the distribution tray indicated with a dotted line in figure 9. Figure 8B is a side sectional view of the distribution units taken along the segment B-B of figure 8A. Figure 8C is a side sectional view of the liquid conduit taken along the segment C-C of figure 8A. Figure 8D is a side sectional view of the downcomer taken along the segment D-D of figure 8A. Arrows in figure 8B, 8C and 8D indicate the fluid flow path through the distribution units.

The distribution tray consists of tray plate 120 provided with a plurality of liquid conduits 133 located on a square pitch on the tray plate. A plurality of downcomers 134 is provided as well, and these downcomers are located on a square pitch with twice the spacing as the liquid conduits so that the distances from one downcomer to each of the four adjacent liquid conduits are identical.

Each liquid conduit 133 consist of a circular pipe 121 fitted through a hole in the tray plate 120. In the upper end of the pipe 121 a vapor entrance is formed by one vertical cut of the two pipe walls along a diameter of pipe 121 and one horizontal cut. A circular cap 122 with same diameter as pipe 121 is concentrically attached to the upper semicircular edge of pipe 121. In this way a vapor inlet 128 to the liquid conduit with a semi-cylindrical shape is formed. The pipe 121 is provided with six circular liquid openings 127 of different sizes. The liquid openings are arranged in three vertical rows equally spaced along the circumference of pipe 121. Two liquid openings are positioned in each of these three rows. An annular plate 125 is inserted in the outlet of the liquid conduit to form a reduced flow area section or circular flow restriction 126. The joints between pipe 121 and tray plate 120 are essentially leak tight.

Each downcomer 134 consists of circular pipe 123 fitted through a hole in the tray plate 120. Like for the liquid conduit a vapor entrance is formed in the upper end of pipe 123 by one vertical cut of the two pipe walls along a diameter of pipe 123 and one horizontal cut. A circular cap 124 with same diameter as pipe 123 is concentrically attached to the upper semicircular edge of pipe 123. In this way a vapor inlet 129 to the downcomer with a semi-cylindrical shape is formed. The joints between pipe 123 and tray plate 120 are essentially leak tight.

During operation the majority of the vapor 131 is flowing through the vapor inlets 129 and pipes 123. The liquid 130 is flowing through the fraction of the liquid openings 127 which are elevated below the liquid level 132. The remaining vapor which did not enter vapor inlets 129 is flowing through the fraction of the openings 127 which are above the liquid level 132 and through the vapor inlets 128. The vapor and liquid is flowing downwards inside liquid conduit 133 and through flow restriction 126 where it exits the distribution tray. The amount of vapor taking the path through the liquid conduits 133 adjust itself until the total pressure drop through the liquid conduits 133 equals the total pressure drop for vapor flow through the downcomers 134. The purpose of flow restriction 126 is to reduce the vapor flow through liquid conduits 133 and thus achieve a significantly lower flow velocity of the vapor entering liquid conduit 133 than the vapor entering downcomer 134. A low vapor entrance velocity to the liquid conduit results in a low pressure drop from the outside vapor space 131 to the vapor space inside the liquid conduit 133 and thus a low maldistribution as defined in equation (1).

Due to the vapor flow through the vapor inlet 128 and through the dry fraction of the liquid openings 127 there is a minor pressure drop from outside the distribution unit to the vapor space inside the upper part of liquid conduit 133. The distributor in figure 8 and 9 will therefore like the distributor in figure 7 show slightly increased maldistribution relative to the examples of the present invention given in figures 2, 3, 5 and 6 since the benefit of "Reason 1" mentioned above is reduced. Since the liquid openings 127 will pass the liquid into a vapor space in pipe 121 the "Reason 2" for reduced maldistribution mentioned above is not relevant for the distribution tray in figures 8 and 9.

In spite of these two drawbacks of distribution units 133/134 relative to the examples of the distribution units given in figures 2, 3, 5 and 6 the distribution units 133/134 will still show improved performance relative to traditional chimney distribution trays because the distribution units 133/134 can be designed with a small cross sectional area and with high vapor flow velocities in the downcomer 134 without significantly increasing the maldistribution as defined in equation (1). The significant benefits of small distribution units have already been discussed above.

In some operating cases with high liquid flow and low vapor flow a liquid level may build-up inside pipe 121. In that case no vapor is flowing through the liquid conduit 133 or the flow restriction 126.

The typical height of the distribution units is between 100 mm and 500 mm more preferably between 150 and 300 mm. The distributor density is typically 25 to 150 distribution units per square meter of tray. More preferably 40 to 100 distribution units per square meter. A typical pitch of the distribution units on the tray is triangular or square. The total cross sectional area of the downcomers is typically between 1% and 10% of the tray area. The cross sectional area of each liquid conduit is typically between 150 mm$^2$ and 1500 mm$^2$. The cross sectional area of any reduced flow area section is typically between 20% and 100% of the downcomer cross sectional area.

**In general terms the following may be noted regarding the invention:**

A device for evenly distribution of downwardly flowing vapor and liquid across the cross section of a vessel in which the downwards flowing vapor and liquid is obstructed by an essential horizontal tray which forces the vapor and liquid to flow through spaced apart openings in the tray wherein the spaced apart openings are connected to liquid conduits for transferring the majority of the liquid and to downcomers for transferring the majority of the vapor from above the tray plate and through the spaced apart openings in the tray and where the vapor flow rate through the liquid conduits is minimized by one or both of two alternative methods 1 and 2:

Method 1:

said liquid conduit has at least one section with liquid flow in a general upwards direction to generate a liquid seal which prevents vapor flow through the liquid conduit other than vapor dissolved or entrained in the liquid during at least one operating mode of the tray.

Method 2:

the relative flow resistance of the liquid conduits and the downcomers is designed to limit the vapor flow through the liquid conduit so that the absolute pressure inside a liquid conduit in a given vertical elevation is higher than the absolute pressure inside a downcomer in same vertical elevation for at least one vertical elevation and for at least one operating mode of the tray.

Preferably $(P_{sur}-P_{lc})/(P_{sur}-P_{vd})$ is less than 0.9, where $P_{sur}$ is the absolute pressure in the surrounding vapor space above said tray, $P_{lc}$ is the absolute pressure inside a liquid conduit in a given vertical elevation and $P_{vd}$ is the absolute pressure inside a downcomer in the same vertical elevation. This means that the pressure drop for vapor entering the liquid downcomer is less than 90% of the pressure drop for vapor entering the downcomer.

Preferably the general flow direction in the downcomers is downwards.

Preferably there is no upwards flow sections in the downcomers.

The minimum vapor flow velocity in the liquid conduit is less than the minimum vapor flow velocity in the downcomer for at least one operating mode.

The minimum vapor velocity in the liquid conduit is preferably less than 75% of the minimum vapor velocity in the downcomer for at least one operating mode.

Preferably the total cross sectional area of all liquid conduits on said horizontal tray is smaller than the total cross sectional area of all downcomers on said horizontal tray.

In a preferred embodiment, the downcomer has one or more reduced flow area sections with reduced flow area and increased flow velocity for increased dispersion of the liquid.

Means for improved liquid spread and dispersion such as vanes, baffles, ribbons, corrugated plates, perforated plates or other inserts can be used in the outlet of the downcomer.

This function can also be provided by an impingement plate such as a flat or curved plate with or without perforations used below the outlet of the downcomer.

A cap may be used above the downcomers to prevent direct liquid flow into the open upper end of the downcomer.

A cap may be used above the liquid conduit to prevent direct liquid flow into the liquid conduit.

The downcomers may have open first ends in communication with a volume above the tray and the liquid conduits may have one or more inlet openings in fluid communication with a volume above said tray and one or more outlet openings in fluid communication with said downcomer. The inlet openings in the liquid conduit are positioned at an elevation which is lower than said open upper first end of the downcomer.

In one embodiment, bypasses are fitted over or through a first array of said openings in the tray and the downcomers are fitted over or through a second array of said openings in the tray.

**Claims**

1. A method for evenly distributing a downward flow of liquid and vapor across the cross sectional area of a two-phase concurrent downflow vessel below a substantially horizontal liquid collecting tray (20,60,80,100,120) the method comprising the steps of:

   - collecting liquid in a liquid pool (30,71,89,108,130) on said tray (20,60,80,100,120),
   - collecting vapor in a vapor space (29,72,90,109,131) above said liquid pool (30,71,89,108,130)
   - providing a plurality of distribution units (31,75,91,111) for conducting said vapor and said liquid downwards through said tray (20,60,80,100,120) each of said distribution units (31,75,91,111,) comprising a downcorner (21,61,81,101,134), a liquid conduit (34,77,88,112,133) and a vapor/liquid mixing zone,

      - said downcorner (21,61,81,101,134) having a vapor inlet (32,,,107,129) located at an upper end thereof for conducting vapor from said vapor space (29,72,90,109,131) through said vapor inlet (32,,,107,129) to said vapor/liquid mixing zone and
      - said liquid conduit (34,77,88,112,133) having a wall (21,61,82,102,121) with one or more openings (26; 64,65;84;105,106;127) extending through said wall at different distances above said tray (20,60,80,100,120) for conducting liquid from said liquid pool (30,71,89,108,130) through said openings (26;64,65;84;105,106; 127) and to said vapor/liquid mixing zone, in which zone the vapor from said downcorner (21,61,81,101,134) is combined with the liquid from said liquid conduit (34,77,88,112,133) into one combined stream in said vapor/liquid mixing zone,

      - passing the majority of said vapor through said vapor inlets (32,,,107,129), through said downcorners (21,61,81,101,134) and to said vapor/liquid mixing zones,
      - passing substantially all said liquid from said liquid pool (30,71,89,108,130) through said one or more openings (26;64,65;84;105,106;127) to said vapor/liquid mixing zones via said liquid conduits,
      - passing said vapor and said liquid from said vapor/liquid mixing zone to the space below said tray (20,60,80,100,120) and
      - reducing the difference between the pressure of the vapor immediately above a surface (28,74,87,110,132) of said liquid at a point adjacent said wall (21,61,82,102,121) and upstream from one of said one or more openings (26;64,65;84;105,106;127) and the pressure of the vapor downstream from said one or more openings (26;64,65;84;105,106;127) at the same level as said surface (28,74,89,110,132).

2. A method according to claim 1, wherein there is provided two or more openings (26;64;65;84;105,106;127) extending through said wall (21,61,82,102,121) at different distances above said tray (20,60,80,100,120)

3. A method according to claim 1 or 2, where said reduction of difference of pressure is obtained by constraining said liquid to flow upwards through at least a portion of said liquid conduit (34,77,88) to form a liquid seal before reaching

EP 1 846 150 B1

said vapor/liquid mixing zone thereby preventing vapor flow through said liquid conduit (34,77,88,112,133)except for vapor entrained or dissolved in said liquid.

4. A method according to claim 3, wherein a flow restriction such (23,24;68,70;83) as orifices, baffles, vanes, corrugated plates, packing, perforated plates is provided downstream of said vapor/liquid mixing zone to increase the two-phase pressure drop from said vapor/liquid mixing zone to the space below said tray (20,60,80,100,120) for reduction of the sensitivity to variations in liquid level (27,73,87,110,132) on said tray (20,60,80,100,120) of the liquid flow through one of said distribution units (31,75,91,111,).

5. A method according to claim 4, where said two-phase pressure drop exceeds 50% of the total pressure drop from said vapor space (29,72,90,109,131) above said tray (20,60,80,100,120) to the vapor space below said tray (20,60,80,100,120).

6. A method according to claim 4, where said two-phase pressure drop exceeds 80% of the total pressure drop from said vapor space (29,72,90,109,131) above said tray (20,60,80,100,120) to the vapor space below said tray (20,60,80,100,120).

7. A method according to claim 1 or 2, where said reduction of difference of pressure is obtained by reducing the vapor flow through said liquid conduit (88,112,133) by providing a flow obstruction (85,113,126) such as a reduced flow area section or an orifice at a location downstream of said openings (84;105,106;127) and upstream of said vapor/liquid mixing zone.

8. A method according to claim 7, where the pressure drop across said flow obstruction (85,113,126) exceeds 25 % of the total pressure drop from said vapor space (90,109,131) above said tray (80,100,120) to said vapor/liquid mixing zone.

9. A method according to claim 7, where the pressure drop across said flow obstruction (85,113,126) exceeds 50 % of the total pressure drop from said vapor space (90,109,131) above said tray (80,100,120) to said vapor/liquid mixing zone.

10. A method according to claim 7, where the pressure drop across said flow obstruction (85,113,126) exceeds 75 % of the total pressure drop from said vapor space (90,109,131) above said tray (80,100,120) to said vapor/liquid mixing zone.

11. A method according to claim 1-10, where the general flow direction through said downcorner (21,61,81,101,134) is downwards.

12. A method according to any of the claims 1-11, wherein both said liquid conduits (133) and said downcorners (134) in said distribution unit extend through said tray (120), and where said vapor/liquid mixing zone is the space below the tray (120) plate.

13. A method according to any of the claims 1-12, wherein said combined stream is dispersed and spread over a larger area by means for improved liquid spread and dispersion (23,24,35;68,70;83;104) such as vanes, baffles, ribbons, corrugated plates or perforated plates.

14. A method according to any of the claims 1-13, wherein a cap (103,124) is arranged above said vapor inlet in order to prevent direct flow of liquid from said vapor space (109,131) into said vapor inlet (107,129).

15. A method according to any of the claims 1-14, wherein the combined horizontal cross sectional area of all liquid conduits (34,77,88,112,133) on said tray (20,60,80,100,120) is smaller than the combined horizontal cross sectional area of all said downcorners (21,61,81,101,134) on said tray (20,60,80,100,120).

16. A method according to any of the claims 1-15, where said vapor inlet (32,,,107,129) is at a higher elevation than all said openings (26;64,65;84;105,106;127).

17. A device for evenly distributing a downward flow of liquid and vapor across the cross sectional area of a two-phase concurrent downflow vessel comprising:

- a substantially horizontal liquid collecting tray (20, 60, 80, 100, 120) for obstructing the downwards flowing vapor and liquid and for collecting the liquid in a liquid pool (30, 71, 89, 108, 130) on said tray (20,60,80,100,120) and the vapor in a vapor space (29, 72, 90, 109, 131) above said liquid pool (30,71,89,108,130),

- a plurality of distribution units (31,75,91,111,) for conducting said vapor and said liquid downwards through said tray (20, 60, 80, 100, 120), each of said distribution units (31,75,91,111) comprising a downcorner (21,61,81,101,134), a liquid conduit (34,77,88,112,133), a vapor/liquid mixing zone and a combined flow conduit where:

      - said downcorner (21,61,101,134) is provided with a vapor inlet (32,,,107,129) at an upper end thereof and forms a flow channel from said vapor space (29,72,90,109,131) through said vapor inlet (32,,,107,129) to said vapor/liquid mixing zone for conducting the majority of said vapor from said vapor space (29,72,90,109,131) to said vapor/liquid mixing zones,

      - said liquid conduit (34,77,88,112,133) has a wall (21,61,82,102,121) with one or more openings (26;64,65; 84;105,106;127) extending through said wall at different distances above said tray (20,60,80,100,120) and forms a flow channel for liquid from said liquid pool (30,71,89,108,130) through said opening (26;64,65;84; 105,106;127) and to said vapor/liquid mixing zone for conducting essentially all of the liquid from said liquid pool (30,71,89,108,130) to said vapor/liquid mixing zones,

      - said combined flow conduit forming a flow channel from said vapor/liquid mixing zone to a location below said tray, (20,60,80,100,120)

- means for reducing the difference between the pressure of the vapor immediately above a surface (28,74,87,110,132) of said liquid at a point adjacent said wall (21, 61,82,102,121) and upstream from one of said one or more openings, and the pressure of the vapor downstream from said one of said openings (26; 64,65;84;105,106;127) at the same level as said surface (28,74,87,110,132).

18. A device according to claim 17, wherein there is provided two or more liquid openings (26;64,65;84;105,106;127) extending through said wall (21,61,82,102,121) at different distances above said tray (20,60,80,100,120).

19. A device according to claim 17 or 18, where said reduction of difference of pressure is obtained by at least a portion of said liquid conduit (34;76,77;88) upstream of said vapor/liquid mixing zone extending upwards in the direction from said liquid pool (30,71,89) said vapor/liquid mixing zone for constraining said liquid to flow upwards through said portion of said liquid conduit (34;76,77;88) to form a liquid seal before reaching said vapor/liquid mixing zone thereby preventing vapor flow through said liquid conduit (34;76,77;88) except for vapor entrained or dissolved in said liquid.

20. A device according to claim 19, wherein a flow restriction (23,24;68,70;83), such as orifices, baffles, vanes, corrugated plates, packing or perforated plates, is provided downstream of said vapor/liquid mixing zone to increase the two-phase pressure drop from said vapor/liquid mixing zone to the space below said tray, (20,60,80) for reduction of the sensitivity to variations in liquid level (27,73,87) on said tray (20,60,80) of the liquid flow through one of said distribution units (31,75,91).

21. A device according to claim 20, where the minimum flow area through said flow restriction (23,24;68,70;83) is less than 80% of the flow area through said vapor/liquid mixing zone.

22. A device according to claim 20, where the minimum flow area through said flow restriction (23,24,68,70;83) is less than 60% of the flow area through said vapor/liquid mixing zone.

23. A device according to claim 19-22, where said liquid conduit (34;76,77) has all inlet openings thereof (;65,66) submerged in said liquid pool (30,71), thereby forming said liquid seal for preventing vapor entrance into said liquid conduit (34;76,77).

24. A device according to claim 19-23, where said openings (26,64) are provided in a wall (21,61) between said liquid conduit (34,77) and said vapor/liquid mixing zone, thus forming the outlet from the liquid conduit (34,77).

25. A device according to claim 17 or 18, where said reduction in difference of pressure is obtained by providing a flow obstruction (85,113,126), such as a reduced flow area section or an orifice, at a location downstream of said liquid openings (84;105,106;127) and upstream of said vapor/liquid mixing zone for reducing the vapor flow through said liquid conduit (88,112,133).

26. A device according to claim 25, where said openings (65;84;105;106;127) are provided in a wall (61,82,102,121) between said liquid pool (71,89,108,130) and said liquid conduit (76,88,112,133) thus forming the liquid inlet to the liquid conduit (76,88,112,133).

27. A device according to claim 25 or 26, where said liquid conduit (88,112,133) is provided with an inlet opening for vapor (,114,128) located in said vapor space (90,109,131) in order to equalize the pressure across said wall (82,102,121) to increase said reduction in difference of pressure.

28. A device according to claim 27, where a cap (103,122) is provided above said inlet opening (144,128) for vapor to prevent direct flow of liquid into said liquid conduit (112,133) through said inlet opening (114,128) for vapor.

29. A device according to claim 25-28, where the minimum flow area through said flow obstruction (85,113,126) is less than 80% of the inner cross sectional area of said liquid conduit (88,112,133).

30. A device according to claim 25-28, where the minimum flow area through said flow obstruction (85,133,126) is less than 60% of the inner cross sectional area of said liquid conduit (88,112,133).

31. A device according to claim 25-28, where the minimum flow area through said flow obstruction (85,113,126) is less than 50% of the inner cross sectional area of said liquid conduit (88,112,133).

32. A device according to claim 17-31, where the general flow direction through the downcorner (21,61,81,101,134) is downwards.

33. A device according to any of the claims 17-32, wherein both said liquid conduits (33) and said downcorners (134) in said distribution unit extend through said tray (120), and where said vapor/liquid mixing zone is the space below the tray plate (120), and where said combined flow conduit is a section of said two-phase concurrent downflow vessel below said tray (120).

34. A device according to claim 17-33, wherein means for improved liquid spread and dispersion (23,24,35;68,70;83; 104) such as orifices, vanes, baffles, ribbons, corrugated plates or perforated plates are provided downstream from or in said combined flow conduit to improve the local spread and distribution of the liquid and vapor exiting said distribution unit (31,75,91,111).

35. A device according to claim 17-34, wherein a cap (103,124) is arranged above said vapor inlet (107,129) in order to prevent direct flow of liquid from said vapor space (109,131) through said vapor inlet (107,129) and into said downcorner (101,134).

36. A device according to any of the claims 17-35, wherein the combined horizontal cross sectional area of all said liquid conduits (34,77,88,112,133) on said tray (20,60,80,100,120) is smaller than the combined horizontal cross sectional area of all said downcorners (21,61,81,101,134) on said tray.

37. A device according to any of the claims 17-36, where said vapor inlet (32,,,107,129) is at a higher elevation than all said openings (26;64;65;84;105,106;127).

38. A device according to any of the claims 17-37, wherein distribution units (31,75,91,111,) of different construction are used on one tray (20,60,80,100,120).

39. A device according to any of the claims 17-38, wherein two or more of said liquid conduits (34,77,88,112,133) are used in said distribution unit (31,75,91,111,).

40. A device according to any of the claims 17-39, wherein two or more of said downcorners (21,61,81,101,134) are used in said distribution unit (31,75,71,111,).

**Patentansprüche**

1. Ein Verfahren zum gleichmäßigen Verteilen einer Abwärtsströmung von Flüssigkeit und Dampf quer durch die Querschnittsfläche eines Zweiphasen-Abwärtsgleichstrombehälters unter einer im Wesentlichen horizontalen flüs-

sigkeitssammelnden Wanne (20, 60, 80, 100, 120), wobei das Verfahren folgende Schritte umfasst:

- Sammeln von Flüssigkeit in einem Flüssigkeitsbecken (30, 71, 89, 108, 130) auf der besagten Wanne (20, 60, 80, 100, 120),
- Sammeln von Dampf in einem Dampfraum (29, 72, 90, 109, 131) über dem besagten Flüssigkeitsbecken (30, 71, 89, 108, 130),
- Bereitstellen einer Mehrheit von Verteilungseinheiten (31, 75, 91, 111) zum Leiten des besagten Dampfs und der besagten Flüssigkeit abwärts durch die besagte Wanne (20, 60, 80, 100, 120), wobei jede der besagten Verteilungseinheiten (31, 75, 91, 111) ein Abwärtsstromrohr (21, 61, 81, 101, 134), ein Flüssigkeitsrohr (34, 77, 88, 112, 133) und eine Dampf/Flüssigkeits-Mischzone umfasst,

- wobei das besagte Abwärtsstromrohr (21, 61, 81, 101, 134) einen an dessen oberem Ende angeordneten Dampfeingang (32, 107, 129) zum Leiten von Dampf vom besagten Dampfraum (29, 72, 90, 109, 131) durch den besagten Dampfeingang (32, 107, 129) zur besagten Dampf/Flüssigkeits-Mischzone aufweist, und
- wobei das besagte Flüssigkeitsrohr (34, 77, 88, 112, 133) eine Wand (21, 61, 82, 102, 121) mit einer oder mehr Öffnungen (26; 64, 65; 84; 105, 106; 127) aufweist, die sich durch die besagte Wand in unterschiedlichen Abständen über der besagten Wanne (20, 60, 80, 100, 120) zum Leiten von Flüssigkeit vom besagten Flüssigkeitsbecken (30, 71, 89, 108, 130) durch die besagten Öffnungen (26; 64, 65; 84; 105, 106; 127) und zur besagten Dampf/ Flüssigkeits-Mischzone erstrecken, in welcher Zone der Dampf aus dem besagten Abwärtsstromrohr (21, 61, 81, 101, 134) mit der Flüssigkeit aus dem besagten Flüssigkeitsrohr (34, 77, 88, 112, 133) zu einem kombinierten Strom in der besagten Dampf/Flüssigkeits-Mischzone kombiniert wird,

- Durchleiten der Mehrheit des besagten Dampfs durch die besagten Dampfeingänge (32, 107, 129), durch die besagten Abwärtsstromrohre (21, 61, 81, 101, 134) und bis zu den besagten Dampf/Flüssigkeits-Mischzonen,
- Durchleiten im Wesentlichen all der besagten Flüssigkeit vom besagten Flüssigkeitsbecken (30, 71, 89, 108, 130) durch die besagte eine oder mehr Öffnungen (26; 64, 65; 84; 105, 106; 127) bis zu den besagten Dampf/Flüssigkeits-Mischzonen über die besagten Flüssigkeitsrohre,
- Durchleiten des besagten Dampfs und der besagten Flüssigkeit von der besagten Dampf/Flüssigkeits-Mischzone bis zum Raum unter der besagten Wanne (20, 60, 80, 100, 120), und
- Verringern des Unterschieds zwischen dem Drucks des Dampfs unmittelbar über einer Oberfläche (28, 74, 87, 110, 132) der besagten Flüssigkeit an einem Punkt angrenzend an die besagte Wand (21, 61, 82, 102, 121) und stromaufwärts von einer der besagten einen oder mehr Öffnungen (26; 64, 65; 84; 105, 106; 127), und dem Druck des Dampfs stromabwärts von der besagten einen oder mehr Öffnungen (26; 64, 65; 84; 105, 106; 127) auf der gleichen Ebene wie die besagte Oberfläche (28, 74, 87, 110, 132).

2. Ein Verfahren nach Anspruch 1, worin zwei oder mehr Öffnungen (26; 64, 65; 84; 105, 106; 127) vorgesehen sind, die sich durch die besagte Wand (21, 61, 82, 102, 121) in unterschiedlichen Abständen über der besagten Wanne (20, 60, 80, 100, 120) erstrecken.

3. Ein Verfahren nach Anspruch 1 oder 2, wobei die besagte Verringerung des Druckunterschieds **dadurch** erzielt wird, dass die besagte Flüssigkeit dazu gezwungen wird, aufwärts durch mindestens einen Teil des besagten Flüssigkeitsrohrs (34, 77, 88) zum Bilden einer Flüssigkeitsdichtung vor Erreichen der besagten Dampf/Flüssigkeits-Mischzone zu strömen, wodurch Dampfströmung durch das besagte Flüssigkeitsrohr (34, 77, 88, 112, 133) verhindert wird mit Ausnahme von Dampf, der in der besagten Flüssigkeit gelöst oder darin eingemischt ist.

4. Ein Verfahren nach Anspruch 3, worin eine Flüssigkeitsbegrenzung (23, 24; 68, 70; 83) wie zum Beispiel Öffnungen, Ablenkplatten, Flügel, Wellplatten, Dichtung, Lochplatten, stromabwärts der besagten Dampf/Flüssigkeits-Mischzone zum Erhöhen des zweiphasigen Druckabfalls von der besagten Dampf/Flüssigkeits-Mischzone bis zum Raum unter der besagten Wanne (20, 60, 80, 100, 120) vorgesehen ist, zur Verringerung der Empfindlichkeit gegen Variationen im Flüssigkeitsniveau (27, 73, 87, 110, 132) auf der besagten Wanne (20, 60, 80, 100, 120) der Flüssigkeitsströmung durch eine der besagten Verteilungseinheiten (31, 75, 91, 111).

5. Ein Verfahren nach Anspruch 4, wobei der besagte zweiphasige Druckabfall 50% des gesamten Druckabfalls vom besagten Dampfraum (29, 72, 90, 109, 131) über der besagten Wanne (20, 60, 80, 100, 120) bis zum Dampfraum unter der besagten Wanne (20, 60, 80, 100, 120) übersteigt.

6. Ein Verfahren nach Anspruch 4, wobei der besagte zweiphasige Druckabfall 80% des gesamten Druckabfalls vom besagten Dampfraum (29, 72, 90, 109, 131) über der besagten Wanne (20, 60, 80, 100, 120) bis zum Dampfraum unter der besagten Wanne (20, 60, 80, 100, 120) übersteigt.

7. Ein Verfahren nach Anspruch 1 oder 2, wobei die besagte Verringerung des Druckunterschieds durch Verringerung der Dampfströmung durch das besagte Flüssigkeitsrohr (88, 112, 133) durch Bereitstellen einer Strömungsversperrung (85, 113, 126) wie zum Beispiel eines reduzierten Strömungsflächenabschnittes oder einer Öffnung an einer Stelle stromabwärts der besagten Öffnungen (84; 105, 106; 127) und stromaufwärts der besagten Dampf/Flüssigkeits-Mischzone erzielt wird.

8. Ein Verfahren nach Anspruch 7, wobei der Druckabfall quer durch die besagte Strömungsversperrung (85, 113, 126) 25 % des gesamten Druckabfalls vom besagten Dampfraum (90, 109, 131) über der besagten Wanne (80, 100, 120) bis zur besagten Dampf/Flüssigkeits-Mischzone übersteigt.

9. Ein Verfahren nach Anspruch 7, wobei der Druckabfall quer durch die besagte Strömungsversperrung (85, 113, 126) 50 % des gesamten Druckabfalls vom besagten Dampfraum (90, 109, 131) über der besagten Wanne (80, 100, 120) bis zur besagten Dampf/Flüssigkeits-Mischzone übersteigt.

10. Ein Verfahren nach Anspruch 7, wobei der Druckabfall quer durch die besagte Strömungsversperrung (85, 113, 126) 75 % des gesamten Druckabfalls vom besagten Dampfraum (90, 109, 131) über der besagten Wanne (80, 100, 120) bis zur besagten Dampf/Flüssigkeits-Mischzone übersteigt.

11. Ein Verfahren nach Anspruch 1-10, wobei die allgemeine Strömungsrichtung durch das besagte Abwärtsstromrohr (21, 61, 81, 101, 134) abwärts ist.

12. Ein Verfahren nach einem der Ansprüche 1-11, worin sowohl die besagten Flüssigkeitsrohre (133) als auch die besagten Abwärtsstromrohre (134) in der besagten Verteilungseinheit sich durch die besagte Wanne (120) erstrekken, und wobei die besagte Dampf/Flüssigkeits-Mischzone der Raum unter der Wannenplatte (120) ist.

13. Ein Verfahren nach einem der Ansprüche 1-12, worin der besagte kombinierte Strom durch Organe zur verbesserten Flüssigkeitsausbreitung und -verteilung (23, 24, 35; 68, 70; 83; 104), wie zum Beispiel Flügel, Ablenkplatten, Bänder, Wellplatten oder Lochplatten, über eine größere Fläche verteilt und ausgebreitet ist.

14. Ein Verfahren nach einem der Ansprüche 1-13, worin ein Deckel (103, 124) über dem besagten Dampfeingang zum Verhindern einer direkten Strömung von Flüssigkeit vom besagten Dampfraum (109, 131) in den besagten Dampfeingang (107, 129) angeordnet ist.

15. Ein Verfahren nach einem der Ansprüche 1-14, worin die kombinierte horizontale Querschnittsfläche all der besagten Flüssigkeitsrohre (34, 77, 88, 112, 133) auf der besagten Wanne (20, 60, 80, 100, 120) kleiner ist als die kombinierte horizontale Querschnittsfläche all der besagten Abwärtsstromrohre (21, 61, 81, 101, 134) auf der besagten Wanne (20, 60, 80, 100, 120).

16. Ein Verfahren nach einem der Ansprüche 1-15, wobei der besagte Dampfeingang (32, 107, 129) sich auf einer höheren Höhe als all die besagten Öffnungen (26; 64, 65; 84; 105, 106; 127) befindet.

17. Eine Vorrichtung zum gleichmäßigen Verteilen einer Abwärtsströmung von Flüssigkeit und Dampf quer durch die Querschnittsfläche eines Zweiphasen-Abwärtsgleichstrombehälters umfassend:

- eine im Wesentlichen horizontale flüssigkeitssammelnde Wanne (20, 60, 80, 100, 120) zum Versperren des abwärts strömenden Dampfs und der abwärts strömenden Flüssigkeit und zum Sammeln der Flüssigkeit in einem Flüssigkeitsbecken (30, 71, 89, 108, 130) auf der besagten Wanne (20, 60, 80, 100, 120) und des Dampfs in einem Dampfraum (29, 72, 90, 109, 131) über dem besagten Flüssigkeitsbecken (30, 71, 89, 108, 130),
- eine Mehrheit von Verteilungseinheiten (31, 75, 91, 111) zum Leiten des besagten Dampfs und der besagten Flüssigkeit abwärts durch die besagte Wanne (20, 60, 80, 100, 120), wobei jede der besagten Verteilungseinheiten (31, 75, 91, 111) ein Abwärtsstromrohr (21, 61, 81, 101, 134), ein Flüssigkeitsrohr (34, 77, 88, 112, 133), eine Dampf/Flüssigkeits-Mischzone und ein kombiniertes Strömungsrohr umfasst, wobei

- das besagte Abwärtsstromrohr (21, 61, 81, 101, 134) mit einem Dampfeingang (32, 107, 129) an dessen oberem Ende versehen ist und einen Strömungskanal vom besagten Dampfraum (29, 72, 90, 109, 131) durch den besagten Dampfeingang (32, 107, 129) bis zur besagten Dampf/Flüssigkeits-Mischzone zum Leiten der Mehrheit des besagten Dampfs vom besagten Dampfraum (29, 72, 90, 109, 131) zu den besagten Dampf/Flüssigkeits-Mischzonen bildet,

- das besagte Flüssigkeitsrohr (34, 77, 88, 112, 133) eine Wand (21, 61, 82, 102, 121) mit einer oder mehr Öffnungen (26; 64, 65; 84; 105, 106; 127) aufweist, die sich durch die besagte Wand in unterschiedlichen Abständen über der besagten Wanne (20, 60, 80, 100, 120) erstrecken, und einen Strömungskanal für Flüssigkeit vom besagten Flüssigkeitsbecken (30, 71, 89, 108, 130) durch die besagte Öffnung (26; 64, 65; 84; 105, 106; 127) und bis zur besagten Dampf/Flüssigkeits-Mischzone zum Leiten im Wesentlichen all der Flüssigkeit vom besagten Flüssigkeitsbecken (30, 71, 89, 108, 130) zu den besagten Dampf/Flüssigkeits-Mischzonen bildet,

- das besagte kombinierte Strömungsrohr einen Strömungskanal von der besagten Dampf/Flüssigkeits-Mischzone zu einer Stelle unter der besagten Wanne (20, 60, 80, 100, 120) bildet,

- Organe zum Verringern des Unterschieds zwischen dem Druck des Dampfs unmittelbar über einer Oberfläche (28, 74, 87, 110, 132) der besagten Flüssigkeit an einem Punkt angrenzend an die besagte Wand (21, 61, 82, 102, 121) und stromaufwärts von einer der besagten einen oder mehr Öffnungen (26; 64, 65; 84; 105, 106; 127), und dem Druck des Dampfs stromabwärts von der besagten einen der besagten Öffnungen (26; 64, 65; 84; 105, 106; 127) auf der gleichen Ebene als die besagte Oberfläche (28, 74, 87, 110, 132).

18. Eine Vorrichtung nach Anspruch 17, worin zwei oder mehr Flüssigkeitsöffnungen 26; 64, 65; 84; 105, 106; 127) vorgesehen sind, die sich durch die besagte Wand (21, 61, 82, 102, 121) in unterschiedlichen Abständen über der besagten Wanne (20, 60, 80, 100, 120) erstrecken.

19. Eine Vorrichtung nach Anspruch 17 oder 18, wobei die besagte Verringerung des Druckunterschieds **dadurch** erzielt wird, dass mindestens ein Teil des besagten Flüssigkeitsrohrs (34; 76, 77; 88) stromaufwärts der besagten Dampf/Flüssigkeits-Mischzone sich aufwärts in der Richtung vom besagten Flüssigkeitsbecken (30, 71, 99) bis zur besagten Dampf/Flüssigkeits-Mischzone erstreckt, um die Flüssigkeit dazu zu zwingen, aufwärts durch den besagten Teil des besagten Flüssigkeitsrohrs (34; 76, 77; 88) zum Bilden einer Flüssigkeitsdichtung vor Erreichen der besagten Dampf/Flüssigkeits-Mischzone zu strömen, wodurch Dampfströmung durch das besagte Flüssigkeitsrohr (34; 76, 77; 88) verhindert wird mit Ausnahme von Dampf, der in der besagten Flüssigkeit gelöst oder darin eingemischt ist.

20. Eine Vorrichtung nach Anspruch 19, worin eine Strömungsbegrenzung (23, 24; 68, 70; 83), wie zum Beispiel Öffnungen, Ablenkplatten, Flügel, Wellplatten, Dichtung oder Lochplatten, stromabwärts der besagten Dampf/Flüssigkeits-Mischzone zum Erhöhen des zweiphasigen Druckabfalls von der besagten Dampf/Flüssigkeits-Mischzone bis zum Raum unter der besagten Wanne (20, 60, 80) vorgesehen ist, zur Verringerung der Empfindlichkeit gegen Variationen im Flüssigkeitsniveau (27, 73, 87) auf der besagten Wanne (20, 60, 80) der Flüssigkeitsströmung durch eine der besagten Verteilungseinheiten (31, 75, 91).

21. Eine Vorrichtung nach Anspruch 20, wobei die Mindestströmungsfläche durch die besagte Strömungsbegrenzung (23, 24; 68, 70; 83) weniger als 80% der Strömungsfläche durch die besagte Dampf/Flüssigkeits-Mischzone beträgt.

22. Eine Vorrichtung nach Anspruch 20, wobei die Mindestströmungsfläche durch die besagte Strömungsbegrenzung (23, 24; 68, 70; 83) weniger als 60% der Strömungsfläche durch die besagte Dampf/Flüssigkeits-Mischzone beträgt.

23. Eine Vorrichtung nach Anspruch 19-22, wobei alle Eingangsöffnungen (65, 66) des besagten Flüssigkeitsrohrs (34, 76, 77) im besagten Flüssigkeitsbecken (30, 71) eingetaucht sind und **dadurch** die besagte Flüssigkeitsdichtung zum Verhindern von Dampfeintritt in das besagte Flüssigkeitsrohr (34; 76, 77) bilden.

24. Eine Vorrichtung nach Anspruch 19-23, wobei die besagten Öffnungen (26, 64) in einer Wand (21, 61) zwischen dem besagten Flüssigkeitsrohr (34, 77) und der besagten Dampf/Flüssigkeits-Mischzone vorgesehen sind, wobei sie den Austritt aus dem Flüssigkeitsrohr (34, 77) bilden.

25. Eine Vorrichtung nach Anspruch 17 oder 18, wobei die besagte Verringerung des Druckunterschieds durch Bereitstellen einer Strömungsversperrung (85, 113, 126) wie zum Beispiel eines reduzierten Strömungsflächenabschnittes oder einer Öffnung an einer Stelle stromabwärts der besagten Flüssigkeitsöffnungen (84; 105, 106; 127) und stromaufwärts der besagten Dampf/Flüssigkeits-Mischzone zur Verringerung der Dampfströmung durch das besagte Flüssigkeitsrohr (88, 112, 133) erzielt wird.

**26.** Eine Vorrichtung nach Anspruch 25, wobei die besagten Öffnungen (65; 84; 105, 106; 127) in einer Wand (61, 82, 102, 121) zwischen dem besagten Flüssigkeitsbecken (71, 89, 108, 130) und dem besagten Flüssigkeitsrohr (76, 88, 112, 133) vorgesehen sind, wobei sie den Flüssigkeitseintritt in das Flüssigkeitsrohr (76, 88, 112, 133) bilden.

**27.** Eine Vorrichtung nach Anspruch 25 oder 26, wobei das besagte Flüssigkeitsrohr (88, 112, 133) mit einer im besagten Dampfraum (90, 109, 131) angeordneten Eingangsöffnung für Dampf (114, 128) versehen ist, um den Druck quer durch die besagte Wand (82, 102, 121) zum Erhöhen der besagten Verringerung des Druckunterschieds auszugleichen.

**28.** Eine Vorrichtung nach Anspruch 27, wobei ein Deckel (103, 122) über der besagten Eingangsöffnung (114, 128) für Dampf zum Verhindern einer direkten Strömung von Flüssigkeit in das besagte Flüssigkeitsrohr (112, 133) durch die besagte Eingangsöffnung (114, 128) für Dampf angeordnet ist.

**29.** Eine Vorrichtung nach Anspruch 25-28, wobei die Mindestströmungsfläche durch die besagte Strömungsversperrung (85, 113, 126) weniger als 80% der inneren Querschnittsfläche des Flüssigkeitsrohrs (88, 112, 133) beträgt.

**30.** Eine Vorrichtung nach Anspruch 25-28, wobei die Mindestströmungsfläche durch die besagte Strömungsversperrung (85, 113, 126) weniger als 60% der inneren Querschnittsfläche des Flüssigkeitsrohrs (88, 112, 133) beträgt.

**31.** Eine Vorrichtung nach Anspruch 25-28, wobei die Mindestströmungsfläche durch die besagte Strömungsversperrung (85, 113, 126) weniger als 50% der inneren Querschnittsfläche des Flüssigkeitsrohrs (88, 112, 133) beträgt.

**32.** Eine Vorrichtung nach Anspruch 17-31, wobei die allgemeine Strömungsrichtung durch das besagte Fallrohr (21, 61, 81, 101, 134) abwärts ist.

**33.** Eine Vorrichtung nach einem der Ansprüche 17-32, worin sowohl die besagten Flüssigkeitsrohre (133) als auch die besagten Fallrohre (134) in der besagten Verteilungseinheit sich durch die besagte Wanne (120) erstrecken, und wobei die besagte Dampf/Flüssigkeits-Mischzone der Raum unter der Wannenplatte (120) ist, und wobei das besagte kombinierte Strömungsrohr ein Abschnitt des besagten Zweiphasen-Abwärtsgleichstrombehälters unter der besagten Wanne (120) ist.

**34.** Eine Vorrichtung nach Anspruch 17-33, worin Organe zu verbesserter Flüssigkeitsausbreitung und -verteilung (23, 24, 35; 68, 70; 83; 104), wie zum Beispiel Öffnungen, Flügel, Ablenkplatten, Bänder, Wellplatten oder Lochplatten stromabwärts von oder im besagten kombinierten Strömungsrohr zum Verbessern der örtlichen Ausbreitung und Verteilung der Flüssigkeit und des Dampfs vorgesehen sind, welche die Verteilungseinheit (31, 75, 91, 111) verlassen.

**35.** Eine Vorrichtung nach Anspruch 17-34, worin ein Deckel (103, 124) über dem besagten Dampfeingang (107, 129) zum Verhindern einer direkten Strömung von Flüssigkeit vom besagten Dampfraum (109, 131) durch den besagten Dampfeingang (107, 129) und in das besagte Abwärtsstromrohr (101, 134) angeordnet ist.

**36.** Eine Vorrichtung nach einem der Ansprüche 17-35, worin die kombinierte horizontale Querschnittsfläche all der besagten Flüssigkeitsrohre (34, 77, 88, 112, 133) auf der besagten Wanne (20, 60, 80, 100, 120) kleiner ist als die kombinierte horizontale Querschnittsfläche all der besagten Abwärtsstromrohre (21, 61, 81, 101, 134) auf der besagten Wanne.

**37.** Eine Vorrichtung nach einem der Ansprüche 17-36, wobei der besagte Dampfeingang (32, 107, 129) sich auf einer höheren Höhe als all die besagten Öffnungen (26; 64, 65; 84; 105, 106; 127) befindet.

**38.** Eine Vorrichtung nach einem der Ansprüche 17-37, worin Verteilungseinheiten (31, 75, 91, 111) verschiedener Konstruktion auf einer Wanne (20, 60, 80, 100, 120) verwendet werden.

**39.** Eine Vorrichtung nach einem der Ansprüche 17-38, worin zwei oder mehr der besagten Flüssigkeitsrohre (34, 77, 88, 112, 133) in der besagten Verteilungseinheit (31, 75, 91, 111) verwendet werden.

**40.** Eine Vorrichtung nach einem der Ansprüche 17-39, worin zwei oder mehr der besagten Abwärtsstromrohre (21, 61, 81, 101, 134) in der besagten Verteilungseinheit (31, 75, 91, 111) verwendet werden.

**Revendications**

1. Procédé de distribution de manière uniforme d'une circulation descendante de liquide et de vapeur à travers la section d'une cuve à circulation descendante simultanée à deux phases en dessous d'un plateau de collection liquide essentiellement horizontal (20, 60, 80, 100,120), le procédé comprenant les étapes de:

   - recueillir du liquide dans un bassin de liquide (30, 71, 89, 108, 130) sur ledit plateau (20, 60, 80, 100,120),
   - recueillir de la vapeur dans un espace de vapeur (29, 72, 90, 109, 131) au dessus dudit bassin de liquide (30, 71, 89, 108, 130),
   - fournir une pluralité d'unités de distribution (31, 75, 91, 111,) pour conduire ladite vapeur et ledit liquide en descente par ledit plateau (20, 60, 80, 100, 120), chacune desdites unités de distribution (31, 75, 91, 111,) comprenant un tuyau de descente (21, 61, 81, 101, 134), un conduit de liquide (34, 77, 88, 112, 133) et une zone de mélange de vapeur/liquide,

   - ledit tuyau de descente (21, 61, 81, 101, 134) ayant une admission de vapeur (32, , , 107,129) localisée à une extrémité de celui-ci afin de conduire de la vapeur dudit espace de vapeur (29, 72, 90, 109, 130) à travers ladite admission de vapeur (32, , , 107,129) à ladite zone de mélange de vapeur/liquide, et
   - ledit conduit de liquide (34, 77, 88, 112, 133) ayant une paroi (21, 61, 82, 102, 121) avec une ou plusieurs ouvertures (26; 64, 65; 84; 105, 106; 127) s'étendant à travers ladite paroi à des différentes distances au dessus dudit plateau (20, 60, 80, 100, 120) afin de conduire du liquide dudit bassin de liquide (30, 71, 89, 108, 130) par lesdites ouvertures (26; 64, 65; 84; 105, 106; 127) à ladite zone de mélange de vapeur/ liquide, dans quelle zone la vapeur dudit tuyau de descente (21, 61, 81, 101, 134) est combinée avec le liquide dudit conduit de liquide (34, 77, 88, 112, 133) jusque dans un flux combiné dans ladite zone de mélange de vapeur/liquide,

   - passer la majorité de ladite vapeur par lesdites admissions de vapeur (32, , , 107,129) à travers lesdits tuyaux de descente (21, 61, 81, 101, 134) auxdites zones de mélange de vapeur/liquide,
   - passer essentiellement tout ledit liquide dudit bassin de liquide (30, 71, 89, 108, 130) par ladite une ou plusieurs ouvertures (26; 64, 65; 84; 105, 106; 127) auxdites zones de mélange de vapeur/liquide via lesdits conduits de liquide,
   - passer ladite vapeur et ledit liquide à partir de ladite zone de mélange de vapeur/liquide à l'espace en dessous dudit plateau (20, 60, 80, 100, 120) et
   - réduire la différence entre la pression de la vapeur immédiatement au dessus d'une surface (28, 74, 87, 110, 132) dudit liquide à un point adjacent ladite paroi (21, 61, 82, 102, 121) et en amont d'une desdites une ou plusieurs ouvertures (26; 64, 65; 84; 105, 106; 127) et la pression de la vapeur en aval de ladite au moins une ouverture (26; 64, 65; 84; 105, 106; 127) au même niveau que ladite surface (28, 74, 89, 110, 132).

2. Procédé selon la revendication 1, où une ou plusieurs ouvertures sont réalisées (26; 64, 65; 84; 105, 106; 127) s'étendant à travers ladite paroi (21, 61, 82, 102, 121) à des différentes distances au dessus dudit plateau (20, 60, 80, 100, 120).

3. Procédé selon la revendication 1 ou 2, où ladite réduction de différence de pression est obtenue en contraignant ledit liquide à couler vers le haut à travers au moins une partie dudit conduit de liquide (34, 77, 88) pour former un joint liquide avant d'atteindre ladite zone de mélange de vapeur/liquide et ainsi prévenir le débit de vapeur à travers ledit conduit de liquide (34, 77, 88, 112, 133), à l'exception de vapeur introduite ou dissouse dans ledit liquide.

4. Procédé selon la revendication 3, où une restriction de débit (23, 24; 68, 70; 83), telle que des orifices, des déflecteurs, des vannes, des tôles ondulées, des garnitures, des plaques perforées, est réalisée en aval de ladite zone de mélange de vapeur/liquide pour augmenter la chute de pression à deux phases à partir de ladite zone de mélange de vapeur/liquide audit espace en dessous dudit plateau (20, 60, 80, 100, 120) afin de réduire la sensibilité aux variations du niveau de liquide (27, 73, 87, 110, 132) sur ledit plateau (20, 60, 80, 100, 120) du débit de liquide à travers une desdites unités de distribution (31, 75, 91, 111, ).

5. Procédé selon la revendication 4, où ladite chute de pression à deux phases excède 50% de ladite chute de pression totale dudit espace de vapeur (29, 72, 90, 109, 131) au dessus dudit plateau (20, 60, 80, 100, 120) audit espace de vapeur en dessous dudit plateau (20, 60, 80, 100, 120).

6. Procédé selon la revendication 4, où ladite chute de pression à deux phases excède 80% de ladite chute de pression totale dudit espace de vapeur (29, 72, 90, 109, 131) au dessus dudit plateau (20, 60, 80, 100, 120) audit espace de vapeur en dessous dudit plateau (20, 60, 80, 100, 120).

7.  Procédé selon la revendication 1 ou 2, où ladite différence de réduction de pression est obtenue par la réduction du débit de vapeur à travers ledit conduit de liquide (88, 112, 133) en fournissant une obstruction du débit (85, 113, 126) telle qu'une section de débit réduite ou une orifice à une localisation en aval desdites ouvertures (84; 105, 106; 127) et en amont de ladite zone de mélange de vapeur/liquide.

8.  Procédé selon la revendication 7, où la chute de pression à travers ladite obstruction du débit (85, 113, 126) excède 25% de la chute de pression totale à partir dudit espace de vapeur (90, 109, 131) au dessus dudit plateau (80, 100, 120) à ladite zone de mélange de vapeur/liquide.

9.  Procédé selon la revendication 7, où la chute de pression à travers ladite obstruction du débit (85, 113, 126) excède 50% de la chute de pression totale à partir dudit espace de vapeur (90, 109, 131) au dessus dudit plateau (80, 100, 120) à ladite zone de mélange de vapeur/liquide.

10. Procédé selon la revendication 7, où la chute de pression à travers ladite obstruction de débit (85, 113, 126) excède 75% de la chute de pression totale à partir dudit espace de vapeur (90, 109, 131) au dessus dudit plateau (80, 100, 120) à ladite zone de mélange de vapeur/liquide.

11. Procédé selon les revendications 1 à 10, où la direction du débit générale à travers ledit tuyau de descente (21, 61, 81, 101, 134) est en descente.

12. Procédé selon l'une quelconque des revendications 1 à 11, où à la fois lesdits conduits de liquide (133) ainsi que lesdits tuyaux de descente (134) dans ladite unité de distribution s'étendent à travers ledit plateau (120), et où ladite zone de mélange de vapeur/liquide consiste en l'espace en dessous dudit plaque de plateau (120).

13. Un procédé selon l'une quelconque des revendications 1 à 12, où ledit flux combiné est dispersé et étendu à travers une superficie importante par moyens de distribution et de dispersion de liquide améliorées (23, 24, 35; 68, 70; 83; 104), tels que des vannes, des déflecteurs, des bandes, des toles ondulées ou des plaques perforées.

14. Procédé selon l'une quelconque des revendications 1 à 13, où une couverture (103, 124) est arrangée au dessus de ladite admission de vapeur afin de prévenir le débit direct de liquide dudit espace de vapeur (109, 131) à l'intérieur de ladite admission de vapeur (107, 129).

15. Procédé selon l'une quelconque des revendications 1 à 14, où la section horizontale combinée de tous lesdits conduits liquides sur ledit plateau (20, 60, 80, 100, 120) est inférieure à la section horizontale combinée de tous les tuyaux de descente (21, 61, 81, 101, 134) sur ledit plateau (20, 60, 80, 100, 120).

16. Procédé selon l'une quelconque des revendications 1 à 15, où ladite admission de vapeur (32, , , 107, 129) est à une élévation supérieure à toutes lesdites ouvertures (26; 64, 65; 84; 105, 106; 127).

17. Dispositif pour la distribution uniforme d'un débit en descente de liquide et de vapeur à travers la section d'une cuve à circulation descendante simultanée à deux phases comprenant:

    - un plateau de collection liquide essentiellement horizontal (20, 60, 80, 100,120) pour l'obstruction de vapeur et de liquide en descente et pour la collection de liquide dans un bassin de liquide (30, 71, 89, 108, 130) sur ledit plateau (20, 60, 80, 100, 120) et la vapeur dans un espace de vapeur (29, 72, 90, 109, 131) au dessus dudit bassin de liquide (30, 71, 89, 108, 130)
    - une pluralité d'unités de distribution (31, 75, 91, 111) pour conduire ladite vapeur et ledit liquide en descente à travers ledit plateau (20, 60, 80, 100,120), chacune desdites unités de distribution (31, 75, 91, 111,) comprenant un tuyau de descente (21, 61, 81, 101, 134), un conduit de liquide (24, 77, 88, 112, 133), une zone de mélange de vapeur/liquide et un conduit de débit combiné où:

        - ledit tuyau de descente (21, 61, 81, 101, 134) est muni d'une admission de vapeur (32, , 107, 129) à une extrémité de celui-ci et forme un canal d'écoulement dudit espace de vapeur (29, 72, 90, 109, 131) à travers ladite admission de vapeur (32, , , 107,129) à ladite zone de mélange de vapeur/liquide afin de conduire la majorité de ladite vapeur dudit espace de vapeur (29, 72, 90, 109, 131) auxdites zones de mélange de vapeur/liquide,

- ledit conduit de liquide (34, 77, 88, 112, 133) a une paroi (21, 61, 82, 102, 121) avec une ou plusieurs ouvertures s'étendant à travers ladite paroi à des distances différentes au dessus dudit plateau (20, 60, 80, 100, 120) et forme un canal d'écoulement pour du liquide dudit bassin de liquide (30, 71, 89, 108, 130) à travers ladite ouverture (26; 64, 65; 84; 105, 106; 127) à ladite zone de mélange de vapeur/liquide pour conduire essentiellement tout le liquide dudit bassin de liquide (30, 71, 89, 108, 130) auxdites zones de mélange de vapeur/liquide,

- ledit conduit de débit combiné formant un canal d'écoulement de ladite zone de mélange de vapeur/liquide à ladite localisation en dessous dudit plateau (20, 60, 80, 100, 120),
- des moyens pour la réduction de la différence entre la pression de la vapeur immédiatement au dessus d'une surface (28, 74, 87, 110, 132) dudit liquide à un point adjacent ladite paroi (21, 61, 82, 102, 121) et en amont d'une desdites une ou plus d'ouvertures (26; 64, 65; 84; 105, 106; 127) et la pression de la vapeur en aval de ladite une desdites ouvertures (26; 64, 65; 84; 105, 106; 127) au même niveau que ladite surface (28, 74, 89, 110, 132).

18. Dispositif selon la revendication 17, où au moins deux ouvertures de liquide (26; 64, 65; 84; 105, 106; 127) sont fournies s'étendant à travers ladite paroi (21, 61, 82, 102, 121) à des différentes distances au dessus dudit plateau (20, 60, 80, 100, 120).

19. Dispositif selon la revendication 17 où 18, où ladite réduction de différence de pression est obtenue par au moins une partie dudit conduit de liquide (34; 76, 77; 88) en amont de ladite zone de mélange de vapeur/liquide s'étendant vers le haut dans la direction à partir dudit bassin de liquide (30, 71, 89) à ladite zone de mélange de vapeur/liquide pour contraindre ledit liquide à couler vers le haut à travers ladite portion dudit conduit de liquide (34; 76, 77; 88) pour former un joint liquide avant d'atteindre ladite zone de mélange de vapeur/liquide, ainsi évitant le débit de vapeur à travers ledit conduit de liquide (34; 76, 77; 88), à l'exception de la vapeur introduite ou dissouse dans ledit liquide.

20. Dispositif selon la revendication 19, où une restriction de débit (23, 24; 68, 70; 83), telle que des orifices, des déflecteurs, des vannes, des toles ondulées, des garnitures ou des plaques perforées, est fourni en aval de ladite zone de mélange de vapeur/liquide afin d'augmenter la chute de pression à deux phases à partir de ladite zone de mélange de vapeur/liquide à l'espace en dessous dudit plateau (20, 60, 80) pour réduire la sensibilité quant aux variations du niveau de liquide (27, 73, 87) sur ledit plateau (20, 60, 80) du débit de liquide à travers l'une desdites unités de distribution (31, 75, 91).

21. Dispositif selon la revendication 20, où la section minimum de débit à travers ladite restriction de débit (23, 24; 68, 70; 83) est inférieure à 80% de la section de débit à travers ladite zone de mélange de vapeur/liquide.

22. Dispositif selon la revendication 20, où la section minimum de débit à travers ladite restriction de débit (23, 24; 68, 70; 83) est inférieure à 60% de la section de débit à travers ladite zone de mélange de vapeur/liquide.

23. Dispositif selon les revendications 19 à 22, où toutes les ouvertures d'admission (; 65, 66) dudit conduit de liquide (34, 76, 77) sont submergées dans ledit bassin de liquide (30, 71), formant ainsi ledit joint liquide pour empêcher l'entrée de vapeur dans ledit conduit de liquide (34; 76, 77).

24. Dispositif selon les revendications 19 à 23, où lesdites ouvertures (26, 64) sont réalisées dans une paroi (21, 61) entre ledit joint de liquide (34, 77) et ladite zone de mélange de vapeur/liquide, formant ainsi la sortie du conduit de liquide (34, 77).

25. Dispositif selon la revendication 17 ou 18, où ladite réduction de la différence de la pression est obtenue en fournissant une obstruction du débit (85, 113, 126), telle qu'une section de débit réduite ou une orifice, à une localisation en aval desdites ouvertures de liquide (84; 105, 106; 127) et en amont de ladite zone de mélange de vapeur/liquide afin de réduire le débit de vapeur à travers ledit conduit de liquide (88, 112, 133).

26. Dispositif selon la revendication 25, où lesdites ouvertures (65; 84; 105, 106; 127) sont fournies dans une paroi (61, 82, 102, 121) entre ledit bassin de liquide (71, 89, 108, 130) et ledit conduit de liquide (76, 88, 112, 133), formant ainsi ladite admission au conduit de liquide (76, 88, 112, 133).

**27.** Dispositif selon la revendication 25 ou 26, où ledit conduit de liquide (88, 112, 133) est muni d'une ouverture d'admission pour de la vapeur (,114, 128) localisée dans ledit espace de vapeur (90, 109, 131) afin d'égaliser la pression à travers ladite paroi (82, 102, 121) pour augmenter ladite réduction de différence de pression.

**28.** Dispositif selon la revendication 27, où une couverture (103, 122) est fournie au dessus de ladite ouverture d'admission (114, 128) de vapeur pour empêcher le débit direct de liquide dans ledit conduit de liquide (112, 133) à travers ladite ouverture d'admission (114, 128) de vapeur.

**29.** Dispositif selon les revendications 25 à 28, où la section minimum de débit à travers ladite obstruction de débit (85, 113,126) est inférieure à 80% de la section intérieure dudit conduit de liquide (88, 112, 133).

**30.** Dispositif selon les revendications 25 à 28, où la section minimum de débit à travers ladite obstruction de flux/débit (85, 113,126) est inférieure à 60% de la section intérieure dudit conduit de liquide (88, 112, 133).

**31.** Dispositif selon les revendications 25 à 28, où la section minimum de débit à travers ladite obstruction de flux/débit (85, 113,126) est inférieure à 50% de la section intérieure dudit conduit de liquide (88, 112, 133).

**32.** Dispositif selon les revendications 17 à 31, où la direction du débit générale à travers le tuyaux de descente (21, 61, 81, 101, 134) est en descente.

**33.** Dispositif selon l'une quelconque des revendications 17 à 32, où les deux conduits de liquide (133) et lesdits tuyaux de descentes (134) dans ladite unité de distribution s'étendent à travers ledit plateau (120), et où ladite zone de mélange vapeur/liquide est constituée par l'espace en dessous de la plaque de plateau (120) et où ledit conduit de débit combiné est une section de ladite cuve à circulation descendante simultanée à deux phases en dessous dudit plateau (12).

**34.** Dispositif selon les revendications 17 à 33, où des moyens pour la distribution et la dispersion de liquide améliorées (23, 24, 35; 68, 70; 83; 104), tels que des orifices, des vannes, des déflecteurs, des bandes, des toles ondulées ou des plaques perforées sont munis en aval à partir dudit conduit de débit combiné ou dans celui-ci pour améliorer la distribution et la dispersion du liquide et de la vapeur sortant de ladite unité de distribution (31, 75, 91, 111).

**35.** Dispositif selon les revendications 17 à 34, où une couverture (103, 124) est arrangée au dessus de ladite admission de vapeur (107, 129) afin d'empêcher le débit direct de liquide dudit espace de vapeur (109, 131) à travers ladite admission de vapeur (107, 129) et jusque dans ledit tuyaux de descente (101, 134).

**36.** Dispositif selon l'une quelconque des revendications 17 à 35, où la section horizontale combinée de tous les conduits de liquide (34, 77, 88, 112, 133) sur ledit plateau (20, 60, 80, 100, 120) est inférieure à la section horizontale combinée de tous les tuyaux de descente (21, 61 81, 101,134) sur ledit plateau.

**37.** Dispositif selon l'une quelconque des revendications 17 à 36, où ladite admission de vapeur (32, , , 107, 129) se trouve à une élévation supérieure à toutes les ouvertures (26; 64, 65; 84; 105, 106;127).

**38.** Dispositif selon l'une quelconque des revendications 17 à 37, où des unités de distribution (31, 75, 91, 111) de constructions différentes sont utilisées sur un plateau (20, 60, 80, 100, 120).

**39.** Dispositif selon l'une quelconque des revendications 17 à 38, où au moins deux desdits conduits de liquide (34, 77, 88, 112, 133) sont utilisés dans ladite unité de distribution (31, 75, 91, 111,).

**40.** Dispositif selon l'une quelconque des revendications 17 à 39, où au moins deux desdits tuyaux de descente (21, 61, 81, 101, 134) sont utilisés dans ladite unité de distribution (31, 75, 91, 111,).

FIG. 1

FIG. 2A

FIG. 2B

FIG. 2C

EP 1 846 150 B1

FIG. 3

FIG. 4C (PRIOR ART)

FIG. 4B (PRIOR ART)

FIG. 4A (PRIOR ART)

FIG. 5A

FIG. 5B

FIG. 5C

FIG. 6A

FIG. 6B

FIG. 6C

FIG. 7A

FIG. 7B

FIG. 7C

FIG. 7D

EP 1 846 150 B1

FIG. 8A

FIG. 8B          FIG. 8C          FIG. 8D

FIG. 9

Collection Tray

Reactor Wall

Mixing Box

Left distribution units are exposed to a low liquid depth.

Right distribution units are exposed to a high liquid depth.

Impingement Plate

Distribution tray is out-of-level by a total of ½"=12.7 mm

Middle distribution units are exposed to an average liquid depth.

FIG. 10

EP 1 846 150 B1

Collection Tray

Reactor Wall

Mixing Box

Liquid level gradients due to liquid flow across the distribution tray from center towards reactor wall

Most liquid enter distribution tray near reactor center line

Impingement Plate

Direction of liquid flow across tray

Direction of liquid flow across tray

FIG. 11

FIG. 12

EP 1 846 150 B1

**Average Liquid Maldistribution**

Average for all 30 data sets for four types of distribution trays.

Legend:
- ■ Liquid Maldistribution due to 12.7 mm (½ inch) out of level
- ▨ Liquid Maldistribution due to 50 Pa pressure difference

Y-axis: % Maldistribution

X-axis categories: Low Velocity Chimney Tray, High Velocity Chimney Tray, Bubble Cap Tray, Present Invention

FIG. 13

EP 1 846 150 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4788040 A
- US 4126540 A
- US 5484578 A
- US 5403561 A
- US 6613219 B
- WO 0053307 A
- US 3218249 A
- US 5942162 A
- US 6769672 B
- EP 0848974 A1
- WO 2005068039 A
- US 6984365 B2